# EUROPÄISCHE PATENTSCHRIFT

(11) **EP 2 437 960 B1**
(45) Veröffentlichungstag und Bekanntmachung des Hinweises auf die Patenterteilung: **16.10.2013**
(21) Anmeldenummer: 10744673.4
(22) Anmeldetag: 01.06.2010
(51) Int. Cl.: B60R 7/04

(54) **BEFESTIGUNGSEINRICHTUNG**
FASTENING DEVICE
DISPOSITIF DE FIXATION

(30) Priorität: 01.06.2009 CH 831092009; 14.08.2009 DE 102009037354; 05.11.2009 DE 102009052115; 15.03.2010 DE 102010011532
(43) Veröffentlichungstag der Anmeldung: 11.04.2012
(73) Patentinhaber: Kinetix AG, 8750 Glarus (CH)
(72) Erfinder: ACKERET, Peter, CH-8048 Zürich (CH); SKOTT, Jürgen, 72213 Altensteig (DE)
(74) Vertreter: Dreiss
(86) Internationale Anmeldenummer: PCT/EP2010/003309
(87) Internationale Veröffentlichungsnummer: WO 2010/139452

(56) Entgegenhaltungen:
- EP-A1- 0 844 138
- EP-A1- 0 917 988
- DE-A1-102005 050 404
- DE-A1-102007 022 454
- GB-A- 2 448 958

## Beschreibung

Die Erfindung betrifft eine Befestigungseinrichtung zum Anschliessen einer Vorrichtung an zwei voneinander beabstandete Kopfstützenstangen eines Fahrzeugsitzes sowie eine solche Vorrichtung zum Aufhängen von Gegenständen an einem Fahrzeugsitzteil, wie eine Rückenlehne, Kopfstütze oder eine Kopfstützenhalterung eines Fahrzeugsitzes.

Eine Befestigungseinrichtung ist von der Anmelderin in der gattungsgemäßen WO 2008 131 944 A1 beschrieben worden, auf die verwiesen wird. Die beschriebene Befestigungseinrichtung umfasst eine Aufnahmebuchse, welche mittels Befestigungselementen an den Kopfstützenstangen eines Fahrzeugsitzes befestigbar ist, sowie ein Steckelement, welches in die Aufnahmebuchse gesteckt und mit einer lösbaren Verriegelung festgehalten wird. Das Steckelement ist Bestandteil verschiedener Module, die so auswechselbar am Fahrzeugsitz montiert, demontiert und gegeneinander ausgetauscht werden können.

Zum Anbringen der Befestigungseinrichtung an den Kopfstützenstangen werden ein erstes und ein zweites Befestigungselement auf zwei gegenüberliegenden Seiten der Kopfstützenstangen angelegt und mittels einer Schraubverbindung gegen die Kopfstützenstangen gespannt. Dies ergibt eine stabile Verbindung, so dass sich auch grössere Vorrichtungen, wie bspw. ein Klapptisch oder eine Kleideraufhängevorrichtung, stabil am Fahrzeugsitz befestigen lassen.

Die an den Fahrzeugsitzen für Fahrer und Beifahrer angebrachten Kopfstützen sind manuell oder elektrisch in der Höhe verstellbar und können so individuell an unterschiedliche Körpergrössen der Benützer angepasst werden. Dies ist für eine Verbesserung des Sitzkomforts, insbesondere aber für eine optimale Abstützung des Kopfes bei Auffahrunfällen erforderlich.

Durch eine an den Kopfstützenstangen montierte Befestigungseinrichtung kann die Höhenverstellbarkeit der Kopfstütze jedoch so eingeschränkt werden, dass die Befestigungseinrichtung zum Einstellen bestimmter Positionen der Kopfstütze von den Kopfstützenstangen entfernt werden muss, was den Bedienungskomfort der Kopfstützenverstellung beeinträchtigt.

Es sind aus der Praxis auch Befestigungseinrichtungen bekannt, welche eine Höhenverstellung der Kopfstütze, an der sie befestigt sind, zulassen. Meist werden an den Kopfstützenstangen oder an deren Führungen in der Rückenlehne des Fahrzeugsitzes Adapterstücke, bspw. in Form kurzer Rohre angebracht in denen sich die Kopfstützenstangen axial bewegen können und an denen die Befestigungseinrichtungen festgemacht werden können.

Diese Lösungen sind jedoch auf bestimmte Durchmesser und Abstände der Kopfstützenstangen abgestimmt. Zudem ist die Montage am Fahrzeugsitz mit erheblichem Aufwand verbunden und nur von einem Fachmann durchführbar. Oft müssen dazu die Kopfstützen sogar aus ihren Halterungen in der Rückenlehne vollständig herausgezogen werden, was bei modernen Kopfstützen oft gar nicht mehr möglich ist.

Werden die Vorrichtungen, bzw. Befestigungseinrichtungen entfernt, bilden die an den Kopfstützenstangen oder deren Führungen verbleibenden Adapterstücke oft ein erhebliches Verletzungsrisiko für die Passagiere auf den Rücksitzen, insbesondere bei Unfällen.

Die Durchmesser der Kopfstützenstangen sowie der Abstand der Kopfstützenstangen zueinander variieren bei unterschiedlichen Fahrzeugmodellen stark. Damit die Befestigungseinrichtung bei einer breiten Palette von Fahrzeug-modellen verwendet werden kann, ist es daher erforderlich, dass eine Anpassung an unterschiedliche Durchmesser und Abstände der Kopfstützenstangen möglich ist.

Zudem sollte das Anbringen und Entfernen der Befestigungseinrichtung einfach und schnell ohne Zuhilfenahme von Werkzeugen auch von Laien durchgeführt werden können.

In verschiedenen Ländern bestehen Vorschriften, gemäss denen Kopfstützen bis nahe an die Oberseite der Rückenlehnen abgesenkt werden können müssen, so dass zwischen der Unterseite der Kopfstützen und der Oberseite der Rückenlehnen nur noch ein Spalt von geringer Höhe frei bleibt. Eine an den Kopfstützenstangen montierte Befestigungseinrichtung muss dieser Vorschrift Rechnung tragen und eine entsprechend geringe Bauhöhe aufweisen.

Oft besteht das Bedürfnis, mitgeführte Gegenstände in Fahrzeugen so zu sichern, dass sie während der Fahrt nicht verrutschen, umkippen oder vom Sitz herunterfallen. Besonders ärgerlich ist dies bei Einkaufstaschen, in denen oft zahlreiche verschiedene stossempfindliche Nahrungsmittel transportiert werden. Aber auch in Handtaschen werden oft viele kleinere Gegenstände mitgeführt, die beim Umkippen im Fahrzeug umherfliegen können und dabei beschädigt werden oder unter den Sitzen verloren gehen. Oft werden auch Notebook-Computer in Taschen im Fahrzeug mitgeführt, die bei brüsken Fahrmanövern im Fahrzeug umher geschleudert werden und dabei Schaden nehmen oder Passagiere verletzen können.

Auf Reisen werden oft auch Kleider auf einzelnen oder mehreren Kleiderbügeln, oft auch in Kleidersäcken verpackt, auf den Beifahrer- oder die Rücksitze gelegt, die wegen des rutschigen Materials schon bei kleinen Beschleunigungen vom Sitz rutschen und auf den Boden fallen, so dass die Kleider schmutzig werden und zerknittern können. Deshalb werden Kleider auf Kleiderbügeln und in Kleidersäcken oft auch an den seitlich über den Türen angeordneten Haltegriffen aufgehängt, wo sie jedoch die Sicht des Fahrers in gefährlicher Weise beeinträchtigen und den Zugang zu den hinteren Sitzen behindern können.

Auf kürzeren Fahrten wird oft auch ein Jackett an einem in den Fahrzeugen üblichen, ebenfalls über der Türe angeordneten und oft mit dem Haltegriff kombinierten Kleiderhalter aufgehängt, was ebenfalls zu Sichtbehinderungen des Fahrers und Behinderungen beim Ein- und Aussteigen führen kann.

Um auch grössere Lasten sicher zu halten und um Passagiere nicht zu gefährden, muss die Vorrichtung sehr stabil und möglichst kompakt sowie schnell montier- und demontierbar sein.

Eine erste Aufgabe der vorliegenden Erfindung ist es, eine Befestigungseinrichtung zu schaffen, die zwischen die Kopfstützenstangen eingesetzt oder aus diesen entnommen werden kann, ohne dass die Kopfstütze über die Höhe der Befestigungseinrichtung hinaus angehoben werden muss.

Eine zweite Aufgabe der vorliegenden Erfindung ist es, eine Befestigungseinrichtung zu schaffen, die ohne Hilfsmittel mit einer Hand zwischen die Kopfstützenstangen eingesetzt oder aus diesen entnommen werden kann.

Eine dritte Aufgabe der vorliegenden Erfindung ist es, eine Befestigungseinrichtung zu schaffen, bei der durch eine Reduktion der Bauteile die Herstellkosten reduziert werden können.

Eine vierte Aufgabe der vorliegenden Erfindung ist es, eine Befestigungseinrichtung zu schaffen, die bei minimaler Bauhöhe eine stabile Verbindung mit den Kopfstützenstangen gewährleistet, ohne dabei die Höhenverstellbarkeit der Kopfstütze zu beinträchtigen.

Eine fünfte Aufgabe der vorliegenden Erfindung ist es, eine Befestigungseinrichtung zu schaffen, die an Kopfstützenstangen mit unterschiedlichen Durchmessern und Abständen zueinander angebracht werden kann.

Eine sechste Aufgabe der vorliegenden Erfindung ist es, eine Befestigungseinrichtung zu schaffen, die ohne Werkzeuge oder Fachkenntnisse einfach und schnell an den Kopfstützenstangen montierbar und demontierbar ist.

Eine siebte Aufgabe der vorliegenden Erfindung ist es, eine Befestigungseinrichtung zu schaffen die, wenn sie an den Kopfstützenstangen montiert ist, kein Verletzungsrisiko für die Passagiere bilden kann.

Eine achte Aufgabe der vorliegenden Erfindung ist es, eine Vorrichtung zum Aufhängen von Gegenständen zu schaffen, die rasch und unkompliziert an Fahrzeugsitzen anbringbar und abnehmbar und möglichst robust ist, so dass auch schwerere Gegenstände aufgehängt werden können. Ferner soll die Vorrichtung so gestaltet sein, dass sie bei Nichtgebrauch möglichst wenig Platz einnimmt und kein Verletzungsrisiko für die Insassen des Fahrzeugs darstellt.

Diese Aufgaben werden erfindungsgemäss durch eine Befestigungseinrichtung gemäß Ansprüche 1 und 7 gelöst.

Gemäss einer bevorzugten Ausführungsform der Erfindung ist das erste Kupplungselement mittig zwischen den beiden Kopfstützenstangen angeordnet und als Aufnahmebuchse ausgebildet, in die das als Steckelement ausgebildete zweite Kupplungselement gesteckt werden kann. Eine solche Zuordnung von Aufnahmebuchse und Steckelement hat den Vorteil, dass auch wenn keine Vorrichtung an der Befestigungseinrichtung angeschlossen ist, keine Teile des ersten Kupplungselements vorstehen und zu einer Verletzungsgefahr für die Passagiere werden könnten. Grundsätzlich möglich wäre aber auch eine umgekehrte Zuordnung von Aufnahmebuchse und Steckelement zum ersten und zweiten Kupplungselement.

Vorteilhaft ist, wenn die Einsteckrichtung des Steckelements in die Aufnahmebuchse senkrecht zu einer Verbindungslinie der Kopfstützenstangen und in etwa horizontal erfolgt. Dies ergibt eine hohe Stabilität, bei minimaler Höhe der Befestigungseinrichtung und eine bequeme Handhabung für die Benützer. Grundsätzlich möglich wäre aber auch eine in etwa senkrechte oder schräge Einsteckrichtung.

Das Steckelement wird vorzugsweise über eine am Steckelement angeordnete, manuell lösbare Verriegelungsvorrichtung in der Aufnahmebuchse verriegelt. Vorzugsweise umfasst die Verriegelung je einen auf beiden Seitenflächen des Steckelements angeordneten Rasthaken, die durch Zusammendrücken von ebenfalls je einem auf beiden Seitenflächen des Steckelements angeordneten Betätigungsorgan lösbar sind.

In einer bevorzugten Ausführungsform sind die Aufnahmebuchse und die Befestigungselemente seitlich nebeneinander angeordnet und in etwa gleich hoch, was eine besonders kompakte und flache Bauweise der Befestigungseinrichtung ergibt. Durch diese Anordnung kann die verfügbare Bauhöhe der Befestigungseinrichtung sowohl für die Aufnahmebuchse als auch für die Befestigungselemente voll genutzt werden, was die Stabilität wesentlich verbessert.

In einer Weiterbildung bilden das erste Befestigungselement und das erste Kupplungselement gemeinsam ein längliches Gehäuse in etwa in Form eines Parallelepipeds, in dem die Aufnahmebuchse untergebracht ist und das mit dem zweiten Befestigungselement über einen Teleskopauszug verbunden ist. Dabei bewegen sich das erste und das zweite Befestigungselement parallel zu einer in etwa horizontal zwischen den Zentren der Kopfstützenstangen verlaufenden Verbindungslinie relativ zueinander.

Das zweite Befestigungselement kann dabei im ersten Befestigungselement oder das erste Befestigungselement im zweiten Befestigungselement geführt sein. Vorzugsweise fluchten die Aussenseiten der beiden Befestigungselemente in etwa, so dass die Befestigungseinrichtung eine möglichst kompakte und homogene Form aufweist.

In einer bevorzugten Ausführungsform umgreift das zweite Befestigungselement das erste Befestigungselement, wobei im Bereich der am ersten Befestigungselement angeordneten Öffnung der Aufnahmebuchse eine Ausnehmung an der entsprechenden Seitenwand des zweiten Befestigungselements vorzusehen ist. Die Öffnung der Aufnahmebuchse fluchten vorzugsweise mit der Seitenwand des ersten Befestigungselements.

Das erste und das zweite Befestigungselement werden vorzugsweise durch eine zwischen ihnen eingespannte Druckfeder auseinandergepresst, wobei Anschläge vorzusehen sind, die den Verfahrweg begrenzen. Dieser wird durch den minimalen und den maximalen Abstand der Kopfstützenstangen, an denen die Befestigungseinrichtung montierbar sein soll, bestimmt, wobei die Anpassungen an die unterschiedlichen Abstände der Kopfstützenstangen automatisch erfolgt.

An den freien Enden der beiden Befestigungselemente sind gabelförmige Ausnehmungen vorgesehen, deren Schenkel V-förmig auseinanderlaufen, so dass sich die Ausnehmungen an Kopfstützenstangen unterschiedlicher Durchmesser abstützen können.

Zum Anbringen der Befestigungseinrichtung an den Kopfstützenstangen wird die Ausnehmung eines der Befestigungselemente in Anlage mit einer der Kopfstützenstangen gebracht, die quasi als "Drehlager" dient und das andere Befestigungselement soweit zurückgezogen, bis die Befestigungseinrichtung an der freien Kopfstützenstange vorbei geschwenkt und die zweite Ausnehmung an der freien Kopfstützenstange eingehängt werden kann.

Zu Entnahme wird eines der Befestigungselemente zurückgezogen und die Befestigungseinrichtung aus den Kopfstützenstangen heraus geschwenkt.

Dies ist auch dann möglich, wenn eine Sperrvorrichtung zwischen dem ersten und zweiten Befestigungselement vorgesehen ist, die zum Zusammenpressen der beiden Befestigungselemente über ein Betätigungselement gelöst werden muss. Das Betätigungselement ist vorteilhaft an einem der Befestigungselemente so angeordnet, dass es beim Zurückziehen des Befestigungselements, bspw. mit dem Daumen, bedient werden kann. Montage und Demontage der Befestigungseinrichtung können so einhändig erfolgen.

Eine Rastvorrichtung ist vorgesehen, mit der die Relativbewegungen der beiden Befestigungselemente in eine oder in beide Bewegungsrichtungen blockierbar sind. Dies hat den Vorteil, dass die Stabilität der Befestigungseinrichtung an den Kopfstützenstangen nicht von der Stärke der Federkraft, mit denen die Befestigungselemente gegen die Kopfstützenstangen gepresst werden oder dem Winkel der V-förmigen Schenkel die sich an den Kopfstützenstangen abstützen, abhängig ist.

In besonders vorteilhafter Weise erfolgt die Blockierung der Befestigungselemente mit einem Rastgesperre, das eine ungehinderte Bewegung der Befestigungselemente auseinander, in Richtung der Kopfstützenstangen, zulässt, jedoch eine Bewegung der Befestigungselemente gegeneinander, weg von den Kopfstützenstangen, sperrt.

Dazu kann parallel zur Bewegungsrichtung an einem der Befestigungselemente ein Zahnstangensegment mit einer Sägeverzahnung angeordnet sein, in die ein am anderen Befestigungselement angeordnete, gefederte Sperrklinke eingreift, wobei ein vorzugsweise an einer Seitenwand dieses Befestigungselements angeordnetes Betätigungselemente vorzusehen ist, mit dem die Sperrklinke manuell lösbar ist, so dass sich die Befestigungselemente zur Montage oder Demontage der Befestigungseinrichtung an den Kopfstützenstangen frei gegeneinander bewegen können.

Gemäss einer weiteren Ausführungsform können die beiden Befestigungselemente mit einer Gewindespindel gegeneinander oder auseinander bewegt werden, wobei die Gewindespindel am einen und die Spindelmutter am anderen Befestigungselement angeordnet sind und die Gewindespindel oder die Spindelmutter mit einem von aussen zugänglichen Verstellrad drehbar ist. Die Gewindespindel kann an Stelle oder zusätzlich zu einer Feder zur Bewegung der Befestigungselemente vorgesehen werden. So könnte beispielsweise die Gewindespindel zur Grobeinstellung und die Feder zum Ausgleich von Toleranzen bei den Stangenabständen vorgesehen werden. Bei Verwendung einer Gewindespindel könnte eine Rastvorrichtung entfallen, da eine Relativbewegung der beiden Befestigungselemente gesperrt ist.

Gemäss einer weiteren Ausführungsform können sich die Befestigungselemente statt von innen von aussen an den Kopfstützenstangen abstützen, wobei dann anstelle von gabelförmigen Ausnehmungen vorzugsweise U-förmige Haken mit konischen Schenkeln an den gegen die Kopfstützenstangen gerichteten Enden der Befestigungselemente angeordnet sind. Statt einer Druckfeder, welche die Befestigungselemente auseinanderdrückt, wäre dann eine Zugfeder vorzusehen, welche die Befestigungselemente zusammenzieht.

Aufnahmebuchse, Steckelement und Verriegelungsvorrichtung sind vorzugsweise so ausgebildet und aufeinander abgestimmt, dass das Steckelement unter Beibehaltung der Einsteckrichtung in zwei 180° unterschiedlichen Positionen in die Aufnahmebuchse einsteck- und Verriegelbar ist.

Aufnahmebuchse und Steckelement könnten statt horizontal auch vertikal oder schräg zusammengesteckt werden. Ebenso können Aufnahmebuchse und Steckelement statt kastenförmig auch in jeder anderen Form gestaltet sein, auch mit mehreren Stiften und/oder Stegen und entsprechenden Aufnahmeöffnungen. An Stelle einer geschlossenen Aufnahmebuchse könnten auch andere Formen von Verbindungen, wie bspw. Nut und Feder-Führungen, Schwalbenschwanzführungen oder T-Führungen verwendet werden.

Auch sind Verbindungen nach dem Prinzip eines Bajonettverschlusses denkbar, bei welcher ein Kupplungselement seitlich ins andere Kupplungselement eingeführt und dann gedreht oder verschoben wird. Ebenso ist eine Umkehr der Zuordnung von männlichen und weiblichen Kupplungselementen zur Befestigungseinrichtung und zu der an der Befestigungseinrichtung zu befestigenden Vorrichtung möglich.

Zum Ausgleich einer meist nach hinten gerichteten Schräglage der Rückenlehnen und/oder der Kopfstützenstangen, von Fahrzeugsitzen ist die Aufnahmebuchse vorzugsweise in einem entsprechenden Winkel mit den Kopfstützenstangen verbunden, so dass sie sich in einer überwiegend horizontalen Ebene erstreckt. Der Ausgleich des Winkels erfolgt vorzugsweise durch entsprechende Schrägstellung der Befestigungselement oder der Spannelemente gegenüber der Aufnahmebuchse oder durch entsprechende Schrägstellung der Gabeln gegenüber den Spannelementen.

Das Steckelement kann mit der Vorrichtung fest oder beweglich verbunden sein, zum Beispiel mit einer ausziehbaren Linearführung oder über ein Gelenk, vorzugsweise mit einer im Wesentlichen parallel zu einer horizontal zwischen den Zentren der Kopfstützenstangen verlaufenden Verbindungslinie.

Die Befestigungseinrichtung gemäß einer zweiten erfindungsgemässen Verwirklichung umfasst ein erstes Kupplungselement zur Aufnahme eines an der Vorrichtung angeordneten zweiten Kupplungselements sowie am ersten Kupplungselement angeordnete Befestigungselemente, mit denen das erste Kupplungselement an den Kopfstützenstangen befestigbar ist, wobei die Befestigungselemente Spannelemente umfassen, welche parallel zu einer Verbindungslinie der Kopfstützenstangen in entgegengesetzte Richtungen bewegliche sind und sich an den Kopfstützenstangen abstützen.

Gemäss einer bevorzugten Ausführungsform der Erfindung ist das erste Kupplungselement mittig zwischen den beiden Kopfstützenstangen angeordnet und als Aufnahmebuchse ausgebildet, in die das als Steckelement ausgebildete zweite Kupplungselement gesteckt werden kann. Eine solche Zuordnung von Aufnahmebuchse und Steckelement hat den Vorteil, dass auch wenn keine Vorrichtung an der Befestigungseinrichtung angeschlossen ist, keine Teile des ersten Kupplungselements vorstehen und zu einer Verletzungsgefahr für die Passagiere werden könnten. Grundsätzlich möglich wäre aber auch eine umgekehrte Zuordnung von Aufnahmebuchse und Steckelement zum ersten und zweiten Kupplungselement.

Vorteilhaft ist, wenn die Einsteckrichtung des Steckelements in die Aufnahmebuchse senkrecht zu einer Verbindungslinie der Kopfstützenstangen und in etwa horizontal erfolgt. Dies ergibt eine hohe Stabilität, bei minimaler Höhe der Befestigungseinrichtung und eine bequeme Handhabung für die Benützer. Grundsätzlich möglich wäre aber auch eine in etwa senkrechte oder schräge Einsteckrichtung.

Gemäss einer bevorzugten Ausführungsform sind die Aufnahmebuchse und die Befestigungselemente seitlich nebeneinander angeordnet und in etwa gleich hoch, was eine besonders kompakte und flache Bauweise der Befestigungseinrichtung ermöglicht. Durch diese Anordnung kann die verfügbare Bauhöhe der Befestigungseinrichtung sowohl für die Aufnahmebuchse als auch für die Befestigungselemente und die an den Befestigungselementen angeordneten Spannelemente voll genutzt werden, was die Stabilität wesentlich verbessert.

In vorteilhafter Weise sind die Aufnahmebuchse und die Befestigungselemente in einem plattenförmigen Gehäuse angeordnet, dessen untere und obere Breitseite in etwa horizontal verlaufen. Das Gehäuse wird vorzugsweise aus zwei horizontal getrennten Gehäuseschalen gebildet, in welche die Funktionsteile vor der Montage eingesetzt werden können. Möglich wäre es auch, die Aufnahmebuchse und die Befestigungselemente als einteiliges Bauteil auszubilden, das vorteilhafterweise auf der Unterseite Öffnungen zum Einsetzen der Funktionsteile aufweist.

Die Einstecköffnungen der Aufnahmebuchse fluchten vorzugsweise mit den quer zur Einsteckrichtung des Steckelements verlaufenden Seitenwänden des Gehäuses. Diese sind vorzugsweise konvex gekrümmt, mit einem maximalen Abstand voneinander in der Mitte der Aufnahmebuchse und einem minimalen Abstand voneinander im Bereich der Kopfstützenstangen. Diese ellipsenförmige Gestaltung ergibt eine bezüglich Sicherheit, Stabilität und Ästhetik optimale Kontur des Gehäuses.

Da die Kopfstützenstangen jedoch bezüglich Dicke von Rückenlehnen und Kopfstützen meist nicht mittig angeordnet sind und der Überstand von Rückenlehnen und Kopfstützen über die Kopfstützenstangen nach vorne meist geringer ist als nach hinten, ist vorzugsweise auch der Überstand des Gehäuses über die Kopfstützenstangen nach vorne geringer als nach hinten, damit sichergestellt ist, dass das Gehäuse nicht über die vorderen Konturen der Rückenlehnen und Kopfstützen vorstehen und den Sitzkomfort oder die Sicherheit von Passagieren beeinträchtigen kann.

An den gegen die Kopfstützenstangen gerichteten Schmalseiten des Gehäuses sind vorzugsweise Stangenöffnungen zur Aufnahme der Kopfstützenstangen angeordnet, so dass das Gehäuse die Kopfstützenstangen mindestens teilweise umschliesst und die Spannelemente auch im Bereich der Kopfstützenstangen im Gehäuse abgestützt sind.

Die Kopfstützenstangen sind meist in Führungshülsen geführt, die in den Rückenlehnen angeordnet sind. Auf der Oberseite der Rückenlehnen sind diese Führungshülsen meist mit Rosetten abgeschlossen, welche über die Oberseite der Rückenlehnen hinausragen. Da das Gehäuse im Bereich der Kopfstützenstangen nur bis auf die Oberseite der Rosetten abgesenkt werden kann, bildet sich zwischen den beiden Rosetten und zwischen der Unterseite des Gehäuses und der Oberseite der Rückenlehne ein Zwischenraum, der Platz bietet für eine auf der Unterseite des Gehäuses angeordnete Auskragung, die eine partielle Vergrösserung der Höhe des Gehäuses im Bereich der Aufnahmebuchse erlaubt, ohne dass dadurch der verfügbare Weg zum Absenken der Kopfstütze eingeschränkt wird.

Diese zusätzliche Höhe kann zur Vergrösserung der Höhe der Aufnahmebuchse und des Steckelements und/oder der Decken- und Bodenwand der Aufnahmebuchse genutzt werden.

In einer bevorzugten Ausführungsform sind an den Befestigungselementen Führungen angeordnet, in denen die Spannelemente parallel zu einer Verbindungslinie der Kopfstützenstangen beweglich geführt sind. Die Führungen sind vorzugsweise als Führungskanäle ausgebildet, die sich von den Seitenwänden der Einsteckbuchse bis zur Seitenwand des Gehäuses im Bereich der Stangenöffnungen erstrecken. Die kreuzförmige Anordnung von Führungskanälen und Aufnahmebuchse im Gehäuse bilden eine optimale Kraftübertragung zwischen Spannelementen und Aufnahmebuchse.

An den gegen die Kopfstützenstangen gerichteten Enden der Spannelemente sind vorzugsweise U-förmige Gabeln angeordnet, deren Schenkel vorzugsweise konisch auseinanderlaufen, so dass sich die Gabeln an Kopfstützenstangen unterschiedlicher Durchmesser abstützen können.

Um eine möglichst stabile Abstützung zu erreichen, entspricht die Höhe der Gabeln vorzugsweise der äusseren Höhe des Gehäuses. Auf der unteren und oberen Breitseite des Gehäuses sind entsprechende Ausnehmungen vorzusehen, damit sich die Gabeln zwischen ihren inneren und äusseren Endstellungen frei bewegen können.

Die Spannelemente werden vorzugsweise mit Druckfedern gegen die Kopfstützenstangen gedrückt, wobei Anschläge vorzusehen sind, die den maximalen Ausschubweg der Spannelemente begrenzen. Der Ausschubweg der Spannelemente wird durch den minimalen und den maximalen Abstand der Kopfstützenstangen, an denen die Befestigungseinrichtung montierbar sein soll, bestimmt, wobei die Anpassungen an die unterschiedliche Abstände der Kopfstützenstangen automatisch erfolgt.

Die Federkraft mit der die Spannelemente gegen die Kopfstützenstangen gepresst werden muss so abgestimmt werden, dass einerseits die axiale Bewegung der Kopfstützenstangen nicht behindert wird und andererseits die Befestigungseinrichtung stabil zwischen den Kopfstützenstangen eingespannt ist.

Die Führungen der Spannelemente sind vorzugsweise an den Seitenwänden angeordnet und erstrecken sich bis zu den äusseren Enden der Gabeln. Hinter den Gabeln sind vorzugsweise zwei Holme angeordnet, deren äusseren Seiten einen Teil der Führungen bilden und zwischen denen ein Freiraum zur Aufnahme der Druckfeder vorgesehen ist.

Die Montage der Befestigungseinrichtung an den Kopfstützenstangen erfolgt auf einfache Weise, indem die Kopfstütze soweit aus der Rückenlehne heraus bewegt wird, dass die Gabeln beider Spannelement bei entsprechender Schräglage des Gehäuses in die beiden Kopfstützenstangen eingeführt werden können. Anschliessend wird die Befestigungseinrichtung gegen die Oberseite der Rückenlehne geschoben, bis das Gehäuse horizontal auf den Rosetten der führungen der Kopfstützenstangen aufliegt. Dann kann die Kopfstütze in die gewünschte Stellung gebracht werden.

Die Bewegungen der beiden Spannelemente könnten mechanisch synchronisiert werden. Dies könnte bspw. mit an den Spannelementen angeordneten Zahnstangen erfolgen, die auf gegenüberliegenden Seiten mit einem gemeinsamen Zahnrad kämmen.

In einer Ausführungsform sind Rastvorrichtungen vorgesehen, mittels denen die Spannelemente in einer oder in beiden Bewegungsrichtung blockierbar sind. Dies hat den Vorteil, dass die Stabilität der Befestigungseinrichtung an den Kopfstützenstangen nicht von der Stärke der Federkraft, mit denen die Spannelemente gegen die Kopfstützenstangen gepresst werden oder dem Winkel der Schenkel der Gabeln abhängig ist.

In besonders vorteilhafter Weise erfolgt die Blockierung der Spannelemente mittels Rastgesperren, die eine ungehinderte Bewegung der Spannelemente in Richtung der Kopfstützenstangen zulassen, jedoch eine Bewegung in Richtung der Aufnahmebuchse sperren. Dazu könnten parallel zur Bewegungsrichtung an den Spannelementen entsprechend ausgebildete Zahnstangensegmente angeordnet sein, in die am Gehäuse angeordnete, gefederte Sperrklinken eingreifen, wobei Betätigungselemente vorzusehen sind, mittels denen die Sperrklinken manuell lösbar sind, so dass sich die Spannelemente zur Montage oder Demontage der Befestigungseinrichtung frei bewegen können. Die Betätigungselemente sind vorzugsweise als Druck- oder Schiebeschalter ausgebildet und auf der Oberseite oder der Seitenwand des Gehäuses angeordnet.

Gemäss einer weiteren Ausführungsform könnten die Spannelemente statt von innen von aussen gegen die Kopfstützenstangen vorgespannt sein, wobei dann anstelle von Gabeln vorzugsweise U-förmige Haken mit konischen Schenkeln an den gegen die Kopfstützenstangen gerichteten Enden der Spannelementen angeordnet sind.

Gemäss einer weiteren Ausführungsform könnte ein bewegliches Spannelement lediglich auf einer Seite der Befestigungseinrichtung vorgesehen sein, während auf der anderen Seite eine feste Gabel am Gehäuse angeordnet ist. Dies führt jedoch dazu, dass die befestigten Vorrichtungen nicht mittig zwischen den Kopfstützenstangen am Fahrzeugsitz befestigt sind. Dies kann dadurch ausgeglichen werden, dass mehrere nebeneinander angeordnete oder seitlich verschiebbare Aufnahmebuchsen bzw. erste Kupplungselemente in der Befestigungseinrichtung vorgesehen sind.

Zur Arretierung des Steckelements in der Aufnahmebuchse ist vorzugsweise eine manuell lösbare Verriegelungsvorrichtung vorgesehen, mit einer oder mehreren Ausnehmungen und einer in die Ausnehmungen eingreifenden, federbeaufschlagten Falle, die in etwa quer zur Einsteckrichtung des Steckelements bewegbar ist.

Die Ausnehmungen sind vorzugsweise am Steckelement und die Falle an der Aufnahmebuchse angeordnet. Durch die Anordnung mehrerer Ausnehmungen hintereinander kann das Steckelement in unterschiedlichen Einstecktiefen in der Aufnahmebuchse verriegelt werden.

Zum Lösen der Verriegelung ist ein vorzugsweise seitlich der Einstecköffnung der Aufnahmebuchse an der Seitenwand des Gehäuses angeordnetes Betätigungsorgan vorgesehen, mit dem die Falle in eine Freigabeposition bewegbar ist. Das Betätigungsorgan kann als Schiebeschalter ausgebildet sein, der quer zur Einschubrichtung des Steckelements bewegbar ist. Falle und Betätigungsorgan können dabei ein gemeinsames Bauteil bilden, das mittels einer Fallenfeder in die Verriegelungsstellung bewegt wird. Alternativ könnte das Betätigungsorgan als separate Drucktaste ausgebildet sein, die über eine Schrägfläche in Wirkverbindung mit der Falle steht.

Aufnahmebuchse, Steckelement und Verriegelungsvorrichtung sind vorzugsweise so ausgebildet und aufeinander abgestimmt, dass das Steckelement unter Beibehaltung der Einsteckrichtung in zwei 180° unterschiedlichen Positionen in die Aufnahmebuchse einsteck- und Verriegelbar ist. Dies ermöglicht die Befestigung von Vorrichtungen in zwei 180° unterschiedlichen Orientierungen, bspw. an Fahrer- und Beifahrersitzen.

In einer weiteren Ausführungsform weist die Aufnahmebuchse zwei einander gegenüberliegende Einstecköffnungen auf, so dass das Steckelement von der Vorder- oder der Rückseite des Fahrzeugsitzes in die Aufnahmebuchse gesteckt werden kann. Dies ermöglicht ohne Umbau der Befestigungseinrichtung das Anbringen von Vorrichtungen auf der Vorderseite oder der Rückseite des Fahrzeugsitzes.

Vorteilhaft ist es, die Verriegelungsvorrichtung so auszubilden, dass das Steckelement in entgegengesetzten Einsteckrichtungen verriegelbar ist, bspw. durch entsprechend versetzte Anordnung der Ausnehmungen an beiden Seitenwänden des Steckelements.

Bei Verwendung von Aufnahmebuchsen mit zwei gegenüberliegenden Einstecköffnungen sind vorzugsweise Anschläge am Steckelement angeordnet, welche die Einstecktiefe des Steckelements begrenzen.

Die Aufnahmebuchse und das Steckelement sind vorzugsweise plattenförmig ausgebildet. Die Innenführungen der Aufnahmebuchse und die Aussenführungen des Steckelements verlaufen bevorzugt parallel, so dass unabhängig von der Einsteckrichtung oder Einstecktiefe eine formschlüssige Aufnahme des Steckelements in der Aufnahmebuchse gewährleistet ist.

Aufnahmebuchse und Steckelement könnten statt kastenförmig bzw. plattenförmig auch in jeder anderen Form gestaltet sein, auch mit mehreren Stiften und/oder Stegen und entsprechenden Aufnahmeöffnungen. An Stelle einer geschlossenen Aufnahmebuchse könnten auch andere Formen von Verbindungen, wie bspw. Nut und Feder-Führungen, Schwalbenschwanzführungen oder T-Führungen verwendet werden. Auch sind Verbindungen nach dem Prinzip eines Bajonettverschlusses denkbar, bei welcher ein Kupplungselement seitlich ins andere Kupplungselement eingeführt und dann gedreht oder verschoben wird. Ebenso ist eine Umkehr der Zuordnung von männlichen und weiblichen Kupplungselementen zur Befestigungseinrichtung und zu der an der Befestigungseinrichtung zu befestigenden Vorrichtung möglich.

Zum Ausgleich einer meist nach hinten gerichteten Schräglage der Rückenlehnen und/oder der Kopfstützenstangen von Fahrzeugsitzen ist die Aufnahmebuchse vorzugsweise in einem entsprechenden Winkel mit den Kopfstützenstangen verbunden, so dass sie sich in einer überwiegend horizontalen Ebene erstreckt. Der Ausgleich des Winkels erfolgt vorzugsweise durch entsprechende Schrägstellung der Befestigungselement oder der Spannelemente gegenüber der Aufnahmebuchse oder durch entsprechende Schrägstellung der Gabeln gegenüber den Spannelementen.

Das Steckelement kann mit der Vorrichtung fest oder über ein Gelenk verbunden sein. Die Gelenkachse verläuft dabei vorzugsweise parallel zu einer Verbindungsebene der beiden Kopfstützenstangen.

Die Vorrichtung gemäß einer dritten erfindungsgemässen Verwirklichung umfasst ein Befestigungsglied zum Anschliessen der Vorrichtung am Fahrzeugsitzteil mit einer Aufnahmebuchse und ein Steckelement, das mit der Aufnahmebuchse gekuppelt werden kann, sowie eine Verriegelungsmechanik zum Verriegeln des Steckelements in der Aufnahmebuchse und einen Trägerarm zum Aufhängen der Gegenstände, wobei die Verriegelungsmechanik sowie der Trägerarm zum Aufhängen der Gegenstände am Steckelement angeordnet sind und wobei der Trägerarm zwischen einer Nicht-gebrauchsstellung, in der er im Wesentlichen am Steckelement anliegt oder in diesem ganz oder teilweise aufgenommen ist und einer Gebrauchsstellung, in der er zum Aufhängen der Gegenstände zugänglich ist, bewegbar ist.

Vorzugsweise umfasst das Steckelement ein im Wesentlichen rechteckiges Gehäuse, mit einem etwas zurückversetzten Führungselement, das von der vorzugsweise ebenfalls rechteckigen Aufnahmebuchse aufgenommen wird. Der so gebildete Absatz zwischen dem Führungselement und den Aussenwänden des Gehäuses stützt sich dabei am Rand der Aufnahmebuchse ab und bildet einen stabilen Anschlag für die Einstecktiefe des Steckelements.

In einer bevorzugten Ausführungsform ist die Verriegelungsmechanik im Gehäuse untergebracht und umfasst zwei Federarme, die am hinteren Ende gelenkig mit dem Gehäuse verbunden sind und an den vorderen Enden nach aussen gerichtete Rasthaken aufweist, die mit einer Rastfeder nach aussen gedrückt werden und in entsprechende Ausnehmungen auf der Innenseite der Aufnahmebuchse einrasten.

Vorzugsweise sind an den Federarmen nach aussen gerichtete Betätigungsorgane angeordnet, mit denen die Federarme zum Lösen der Rasthaken gegeneinander gedrückt werden können.

Gemäss einer bevorzugten Ausführungsform umfasst der Trägerarm eine Bodenwand, sowie eine am vorderen Ende der Bodenwand angeordnete, in etwa vertikal verlaufende Abschlusswand, an deren oberem Ende ein in etwa parallel zur Bodenwand verlaufender, gegen das Befestigungsglied gerichteter, Niederhalter angeordnet ist.

Bevorzugt ist der Trägerarm mit einer Linearführung unterhalb oder oberhalb der Verriegelungsmechanik im Gehäuse geführt und mit einer Federvorrichtung versehen, die ihn bei Nichtgebrauch ins Gehäuse einzieht.

Vorzugsweise wird das Gehäuse mit einem parallel zu seinen Breitseiten verlaufenden Zwischenboden in zwei übereinanderliegende Aufnahmeräume unterteilt, die sich im Wesentlichen über die Gesamtlänge des Steckelements erstrecken, wobei vorzugsweise im unteren Aufnahmeraum der ausziehbare Trägerarm und im oberen Aufnahmeraum die Verriegelungsmechanik des Steckelements untergebracht sind.

In besonders vorteilhafter Weise erstreckt sich der Aufnahmeraum für den Trägerarm bis ans Ende des Führungselements, so dass eine möglichst grosse Führungslänge für den Trägerarm zur Verfügung steht, was sich positiv auf den Auszugsweg und/oder die Stabilität des Trägerarms auswirkt.

Vorteilhaft ist ferner, wenn an der Aussenseite der Stirn- und /oder Deckenwand des Gehäuses eine muldenförmige Vertiefung ausgebildet ist, in der die Abschfusswand und/oder der Niederhalter des Trägerarms in der Nichtgebrauchsstellung aufgenommen sind. Dabei ist die Mulde zur Aufnahme des Niederhalters vorzugsweise soweit über den Niederhalter hinaus verlängert, dass die Kante des Niederhalters zum Herausziehen des Trägerarms aus dem Gehäuse erfasst werden kann.

In der Abschlusswand und dem Niederhalter des Trägerarms kann ein zusätzlicher Kleiderhaken ausgebildet sein, der sowohl in der Gebrauchs- als auch in der Nichtgebrauchsstellung des Trägerarms benutzt werden kann.

Gemäss einer weiteren bevorzugten Ausführungsform kann der Trägerarm über ein Gelenk mit einer im Wesentlichen parallel zur Breitseite der Rückenlehne und/oder Kopfstütze und horizontal verlaufenden Drehachse mit dem Gehäuse verbunden sein. Das Gelenk ist dabei vorzugsweise am hinteren Ende der Bodenwand des Trägerarms angeordnet, so dass der Trägerarm in der Nichtgebrauchsstellung mit dem Niederhalter gegen die Breitseite des Gehäuses gerichtet im Wesentlichen kongruent zur Deckenwand des Gehäuses an dieser anliegt. Der Trägerarm wir vorzugsweise mit einer Schenkelfeder in die Nichtgebrauchsstellung vorgespannt.

Eine besonders vorteilhafte Ausgestaltung der Vorrichtung zeichnet sich dadurch aus, dass eine Verriegelungsmechanik sowie der Trägerarm zum Aufhängen der Gegenstände an dem Steckelement angeordnet ist. Der Trägerarm ist hierbei zwischen einer Nichtgebrauchsstellung, in der er im Wesentlichen am Steckelement anliegt oder in diesem ganz oder teilweise aufgenommen ist, und einer Gebrauchsstellung, in der er zum Aufhängen der Gegenstände zugänglich ist, bewegbar. Das Steckelement weist hierbei Mittel zum Betätigen der Verriegelungsmechanik auf, so dass das Steckelement bei Betätigung der Mittel einhändig entriegelt und aus einer Aufnahmebuchse herausgezogen werden kann.

Es versteht sich, dass insbesondere eine Kombination der Befestigungseinrichtung mit der Vorrichtung zum Aufhängen eine besonders bevorzugte vorteilhafte Ausgestaltung der Erfindung bildet.

Weitere bevorzugte Ausgestaltungen der Erfindung ergeben sich aus den übrigen, in den abhängigen Ansprüchen genannten Merkmalen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend in Ausführungsbeispielen anhand der zugehörigen Zeichnungen näher erläutert.
- Fig. 1: zeigt einen Längsschnitt von der Seite einer ersten Variante der erfindungsgemässen Befestigungseinrichtung, montiert an zwei Kopfstützenstangen.
- Fig. 2: zeigt einen Längsschnitt der Befestigungseinrichtung gemäss Fig. 1 von oben.
- Fig. 3: zeigt das Steckelement zur Befestigungseinrichtung gemäss Fig. 1 und 2 in einem Längsschnitt von oben.
- Fig. 4: zeigt eine Perspektivansicht der Befestigungseinrichtung gemäss Fig. 1 und 2 mit dem Steckelement gemäss Fig. 3 in nicht montiertem Zustand.
- Fig. 5: zeigt einen Längsschnitt von der Seite einer zweiten Variante der erfndungsgemässen Befestigungseinrichtung, montiert an zwei Kopfstützenstangen.
- Fig. 6: zeigt einen Längsschnitt von oben der Befestigungseinrichtung gemäss Fig. 5.
- Fig. 7: zeigt eine Perspektivansicht von hinten einer dritten Variante der erfindungsgemässen Befestigungseinrichtung beim Einsetzen zwischen die Kopfstützenstangen.
- Fig. 8: zeigt eine Perspektivansicht der Befestigungseinrichtung gemäss Fig. 7 von vorne.
- Fig. 9: zeigt eine Ansicht der Befestigungseinrichtung gemäss Fig. 7 und 8 von oben.
- Fig. 10: zeigt einen Längsschnitt von oben der Befestigungseinrichtung gemäss Fig. 7 bis 9 mit dem Steckelement in nicht montiertem Zustand.
- Fig. 11: zeigt eine Perspektivansicht von vorne der Befestigungseinrichtung gemäss Fig. 7 bis 9 mit den Befestigungselementen in Anlage mit Kopfstützenstangen mit minimalem Abstand.
- Fig. 12: zeigt eine Perspektivansicht der Befestigungseinrichtung gemäss Fig. 11 in Anlage mit Kopfstützenstangen mit maximalem Abstand.
- Fig. 13: zeigt einen Längsschnitt der Befestigungseinrichtung gemäss Fig. 11 mit eingestecktem Steckelement von oben, mit aktiver Rastvorrichtung.
- Fig. 14: zeigt einen Längsschnitt der Befestigungseinrichtung gemäss Fig. 13 von oben, mit inaktivierter Rastvorrichtung.
- Fig. 15: zeigt eine teilweise angeschnittene Perspektivansicht der Befestigungseinrichtung mit aktiver Rastvorrichtung.
- Fig. 16: zeigt eine Explosionsdarstellung der Befestigungseinrichtung gemäss Fig. 7 bis 15.
- Fig. 17: zeigt eine Perspektivansicht einer weiteren Variante des Steckelements.
- Fig. 18: zeigt einen Längsschnitt durch das Steckelement gemäss Fig. 17 von oben.
- Fig. 19: zeigt eine Perspektivansicht einer weiteren Variante der Befestigungseinrichtung mit Steckelement.
- Fig. 20: zeigt einen Längsschnitt der Befestigungseinrichtung von oben, mit einer Variante der Rastvorrichtung in der aktiven Stellung.
- Fig. 21: zeigt einen Längsschnitt der Befestigungseinrichtung gemäss Fig. 20 mit der Rastvorrichtung in der inaktiven Stellung.
- Fig. 22: zeigt eine Explosionsdarstellung der Befestigungseinrichtung gemäss Fig. 20 und 21.
- Fig. 23: zeigt eine Perspektivansicht einer vierten Variante der erfindungsgemässen Befestigungseinrichtung, montiert an zwei Kopfstützenstangen sowie ein angeschnittenes Steckelement.
- Fig. 24: zeigt eine Perspektivansicht der Befestigungseinrichtung gemäss Fig. 23 in nicht montiertem Zustand.
- Fig. 25: zeigt eine Ansicht der erfindungsgemässen Befestigungseinrichtung gemäss Fig. 23 mit einer Gehäusevariante, montiert an zwei Kopfstützenstangen eines Fahrzeugsitzes.
- Fig. 26: zeigt einen Längsschnitt durch die Befestigungseinrichtung gemäss Fig. 23 mit dem Steckelement in der Aufnahmebuchse.
- Fig. 27: zeigt eine Explosionsdarstellung der Befestigungseinrichtung gemäss Fig. 24.
- Fig. 28: zeigt eine perspektivische Teilansicht einer Variante der erfindungsgemässen Befestigungseinrichtung gemäss Fig. 24 mit geöffneten Gehäuseschalen.
- Fig. 29: zeigt einen schematischen Längsschnitt der erfindungsgemässen Befestigungseinrichtung gemäss Fig. 28 mit einer Kopfstützenstange.
- Fig. 30: zeigt eine Perspektivansicht einer fünften Variante der erfindungsgemässen Befestigungseinrichtung, montiert an zwei Kopfstützenstangen sowie ein angeschnittenes Steckelement.
- Fig. 31: zeigt einen Längsschnitt durch die Befestigungseinrichtung gemäss Fig. 30 mit dem Steckelement in der Aufnahmebuchse und zwei Kopfstützenstangen.
- Fig. 32: zeigt eine Perspektivansicht einer weiteren Variante des Steck-elements mit integriertem Trägerarm in der Nichtgebrauchsstellung.
- Fig. 33: zeigt eine Perspektivansicht des Steckelements gemäss Fig. 32 mit dem Trägerarm in der Gebrauchsstellung.
- Fig. 34: zeigt einen Längsschnitt durch das Steckelement gemäss Fig. 32 mit Befestigungseinrichtung, montiert an einem Fahrzeugsitz.
- Fig. 35: zeigt einen Längsschnitt durch das Steckelement gemäss Fig. 33 mit Befestigungseinrichtung, montiert an einem Fahrzeugsitz.
- Fig. 36: zeigt einen Längsschnitt des Steckelements gemäss Fig. 32 von oben.
- Fig. 37: zeigt einen Längsschnitt des Steckelements gemäss Fig. 33 von oben.
- Fig. 38: zeigt eine Perspektivansicht noch einer weiteren Variante des Steck-elements mit integriertem Trägerarm in der Nichtgebrauchsstellung.
- Fig. 39: zeigt eine Perspektivansicht des Steckelements gemäss Fig. 38 mit dem Trägerarm in der Gebrauchsstellung.
- Fig. 40: zeigt einen Längsschnitt durch das Steckelement gemäss Fig. 38 mit Befestigungseinrichtung, montiert an einem Fahrzeugsitz.
- Fig. 41: zeigt einen Längsschnitt durch das Steckelement gemäss Fig. 39 mit Befestigungseinrichtung, montiert an einem Fahrzeugsitz.
- Fig. 42: zeigt eine Perspektivansicht noch einer weiteren Variante des Steck-elements mit integriertem Trägerarm in der Gebrauchsstellung.
- Fig. 43: zeigt eine Seitenansicht des Steckelements gemäss Fig. 42 mit dem Trägerarm in der Gebrauchsstellung.
- Fig. 44: zeigt eine Perspektivansicht des Steckelements gemäss Fig. 42 und 43 mit dem Trägerarm in der Nichtgebrauchsstellung.
- Fig. 45: zeigt eine Seitenansicht des Steckelements gemäss Fig. 44 mit dem Trägerarm in der Nichtgebrauchsstellung.
- Fig. 46: zeigt einen Längsschnitt des Steckelements gemäss Fig. 42 und 45 mit dem Trägerarm in der Gebrauchsstellung.
- Fig. 47: zeigt einen Längsschnitt des Steckelements gemäss Fig. 44 und 45 mit dem Trägerarm in der Nichtgebrauchsstellung.
- Fig. 48: zeigt eine perspektivische Innenansicht des Steckelements gemäss Fig. 47.
- Fig. 49: zeigt eine Innenansicht von oben des Steckelements gemäss Fig. 47.
- Fig. 50: zeigt eine Explosionsdarstellung des Steckelements gemäss Fig. 42 bis 50.

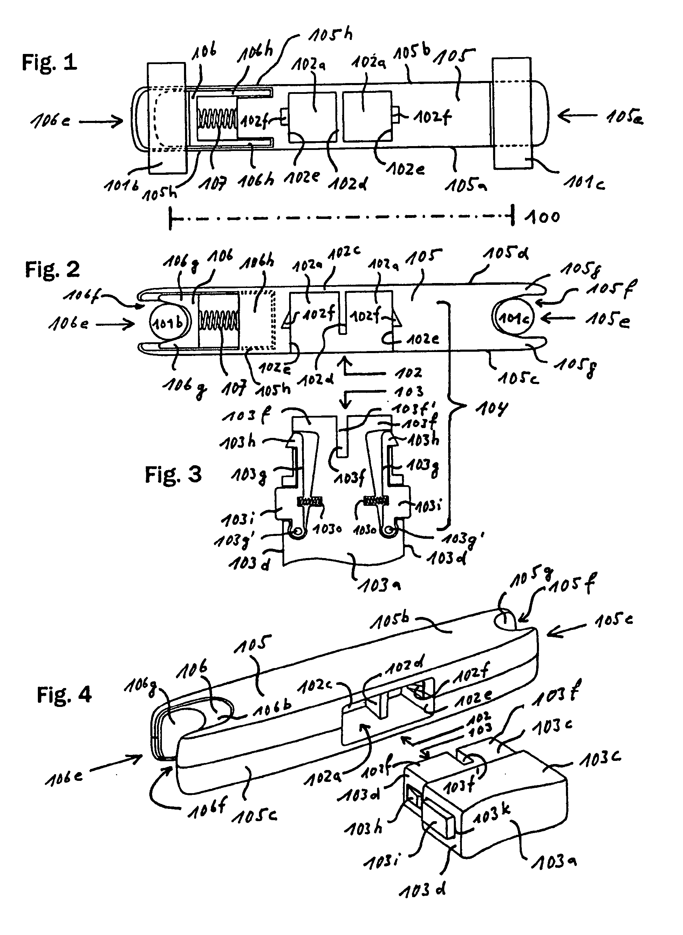

Fig. 1 bis 4 zeigen eine erste Variante der erfindungsgemässen Befestigungseinrichtung. Das erste Befestigungselement 105 umfasst ein längliches Gehäuse in Form eines rechtwinkligen Parallelepipeds mit einer Bodenwand 105a, einer Deckenwand 105b, einer vorderen Seitenwand 105c und einer hinteren Seitenwand 105d.

Im Gehäuse des ersten Befestigungselements 105 ist etwa mittig eine Aufnahmebuchse 102a angeordnet, die an der vorderen Seitenwand 105c eine Öffnung 102b aufweist, in die das Führungselement 103f des Steckelements 103a eingesteckt werden kann. Zur Stabilisierung der Aufnahmebuchse 102a ist an der Rückwand 102c mittig ein Führungssteg 102d angebracht, in den eine am Steckelement 103a vorgesehene Ausnehmung 103f eingreift, wenn das Steckelement 103a in die Aufnahmebuchse 102a eingesteckt ist.

Am Steckelement 103a sind auf beiden Seiten des Führungselements 103f an den Gelenken 103g' gelagerte und mit Federn 103o gegeneinander vorgespannte Federarme 103g angebracht, an deren vorderen Enden Rasthaken 103h angeordnet sind, die in entsprechende Ausnehmungen 102f an den Seitenwänden102e der Aufnahmebuchse 102a eingreifen und das Steckelement 103a in der Aufnahmebuchse 102a verriegeln.

An den beiden Federarmen 103 g sind zwischen den Rasthaken103h und den Gelenken 103g nach aussen gerichtete Betätigungsorgane 103i angeordnet, die durch Tastenöffnungen 103k in den Seitenwänden 103d aus dem Steckelement 103a herausragen. Zum Lösen der Verriegelung werden die beiden Betätigungsorgane 103i gegeneinander gedrückt und das Führungselement 103f des Steckelement 103a aus der Aufnahmebuchse 102a herausgezogen.

Das zweite Befestigungselement 106 ist mit Linearführungen 105h, 106h im ersten Befestigungselement 105 geführt und parallel zu einer in etwa horizontal zwischen den Zentren der Kopfstützenstangen 101 b, 101 c verlaufenden Verbindungslinie 100 relativ zum ersten Befestigungselement 105 bewegbar. Mit der Spannfeder 107 wird das zweite Befestigungselement 106 in Richtung der Kopfstützenstange 101 b gedrückt.

An den äusseren Enden 105e, 106e des ersten Befestigungselements 105 und des zweiten Befestigungselements 106 sind gabelförmige Ausnehmungen 105f, 106 f angeordnet, in denen die Kopfstützenstangen 101b, 101c aufgenommen werden. Die Schenkel 105g, 106g der gabelförmigen Ausnehmungen 105f, 106f öffnen sich V-förmig in Richtung der Kopfstützenstangen 101b, 101c, so dass auch Kopfstützenstangen 101b, 101c unterschiedlicher Durchmesser in etwa tangential an den Schenkeln 105g, 106g anliegen.

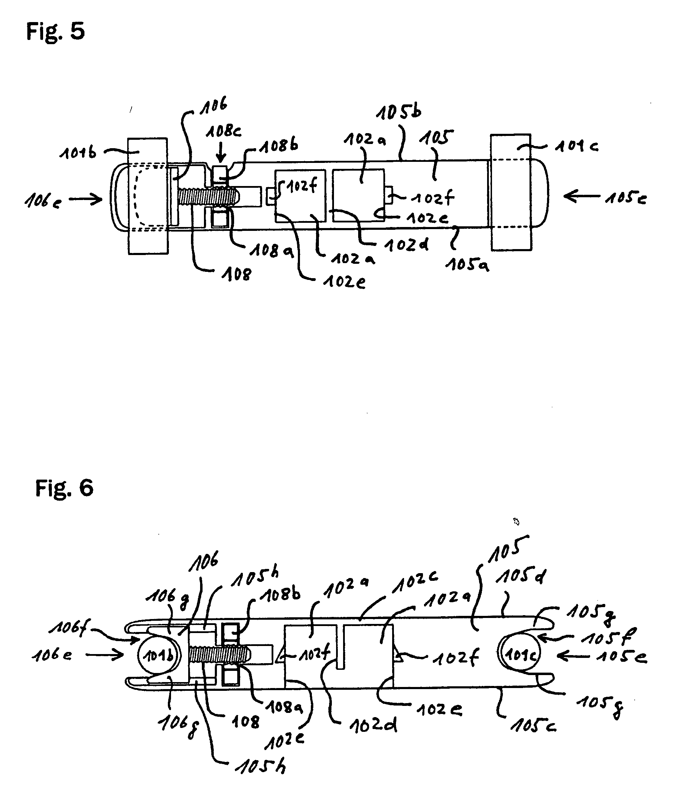

Fig. 5 und 6 zeigen eine zweite Variante der erfindungsgemässen Befestigungseinrichtung. An Stelle der Spannfeder 107 ist bei dieser Variante eine Gewindespindel 108 vorgesehen, um das zweite Befestigungselement 106 relativ zum ersten Befestigungselement 105 zu bewegen und gegen die Kopfstützenstange 101 b zu drücken.

Die Gewindespindel 108 ist fest mit dem zweiten Befestigungselement 106 verbunden. Die Spindelmutter 108a ist im ersten Befestigungselement 105 drehbar gelagert und kann mit dem Verstellrad 108b, das durch die Gehäuseöffnung 108c ragt, gedreht werden, wodurch sich je nach Drehrichtung das erste und das zweite Befestigungselemente 105, 106 gegeneinander oder auseinander bewegen.

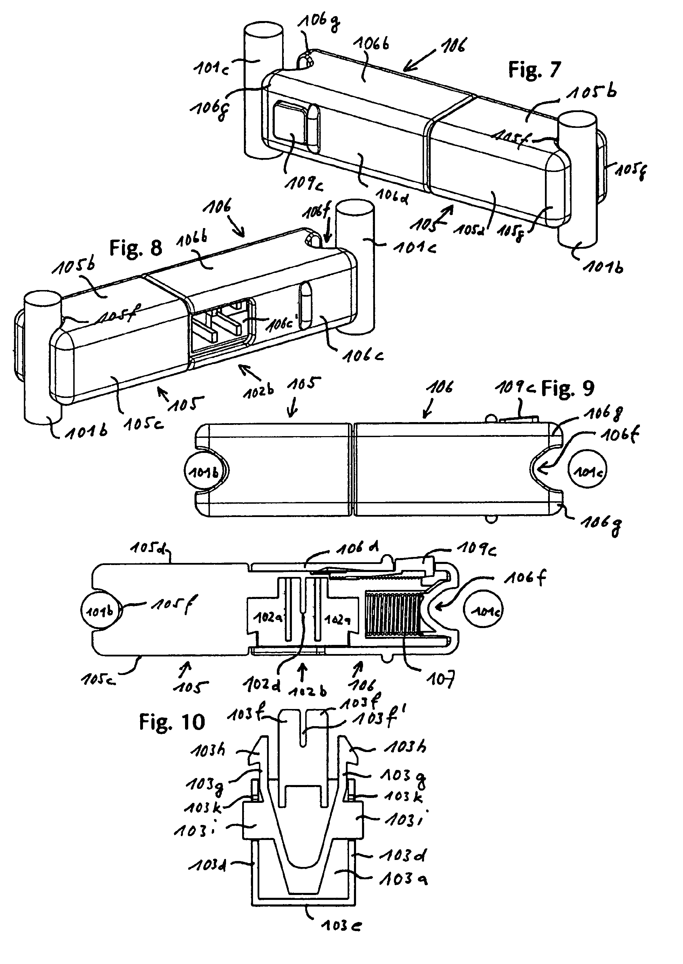

Fig. 7 bis 16 zeigen eine dritte Variante der erfindungsgemässen Befestigungseinrichtung. Bei dieser Variante wird das erste Befestigungselement 105 im zweiten Befestigungselement 106 geführt. Das zweite Befestigungselement 106 umgreift das erste Befestigungselement 105 auf alle vier Seiten, wobei die Aussenseiten der Wände 105a, 106a, 105b, 106b, 105c, 106c, 105d, 106d der beiden Befestigungselemente 105, 106 in etwa fluchten. Dazu sind die Wände 105a, 105b, 105c, 105d im Führungsbereich 105h entsprechend abgesetzt. Im Bereich der Öffnung 102b der Aufnahmebuchse 102a ist die vordere Seitenwand 106c des zweiten Befestigungselements 106 soweit ausgenommen, dass die Öffnung 102b frei bleibt.

Fig. 7 bis 10 zeigen die beiden Befestigungselemente 105, 106 in der maximal zusammengedrückten Stellung mit der Ausnehmung 105f in Anlage mit der Kopfstützenstange 101 b. In dieser Stellung kann die Befestigungseinrichtung in einer etwa horizontalen Lage um die Kopfstützenstange 101 b (die quasi als "Drehlager" dient) an der freien Kopfstützenstange 101c vorbei geschwenkt und so zwischen die beiden Kopfstützenstangen 101b, 101c eingesetzt oder aus diesen entnommen werden.

Fig. 10 zeigt eine Variante des Steckelements 3a. Federarme 103g, Rasthaken 103h und Betätigungsorgane 103i bilden gemeinsam ein Bauteil aus einem flexiblen Kunststoff, das in das Gehäuse, gebildet aus Bodenwand 103, Deckenwand 103c, Seitenwänden 103d, Stirnwand 103e und Führungselement 103f eingesetzt wird.

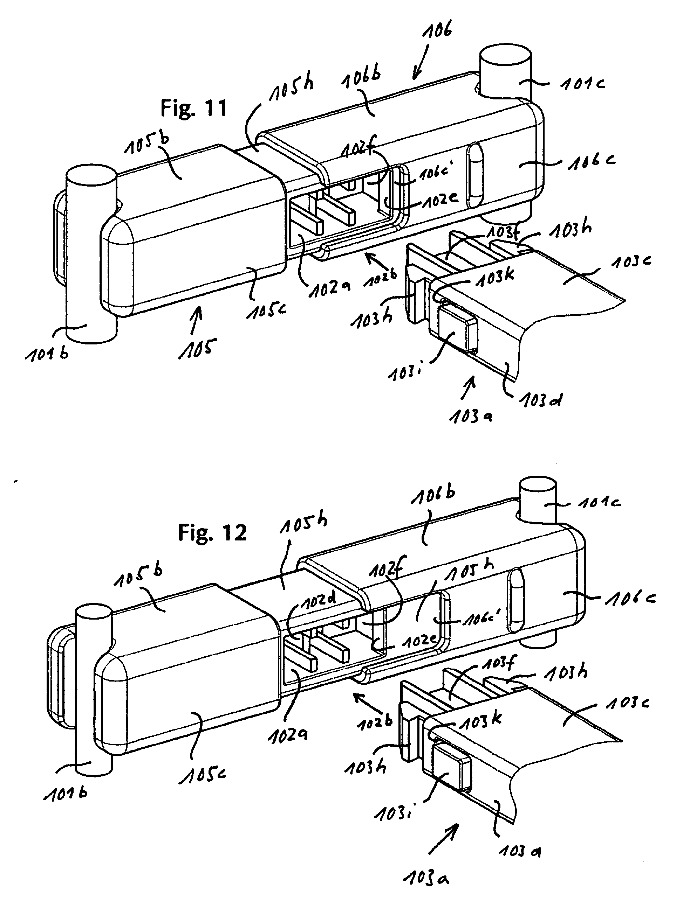

Fig. 11 und 12 zeigen die Befestigungseinrichtung, eingespannt zwischen den Kopfstützenstangen 101b, 101c in zwei Stellungen. Fig. 11 zeigt die Befestigungseinrichtung zwischen Kopfstützenstangen 101b, 101c mit grösstem Durchmesser und kleinstem Stangenabstand und Fig. 12 zeigt die Befestigungseinrichtung zwischen Kopfstützenstangen 101b, 101c mit kleinstem Durchmesser und grösstem Stangenabstand. Die vordere Seitenwand 106c des zweiten Befestigungselements 106 ist mit einer Aussparung 106c' versehen, so dass die Öffnung 102b zum Einführen des Führungselements 103f des Steckelements 103a in die Aufnahmebuchse 102a frei zugänglich bleibt.

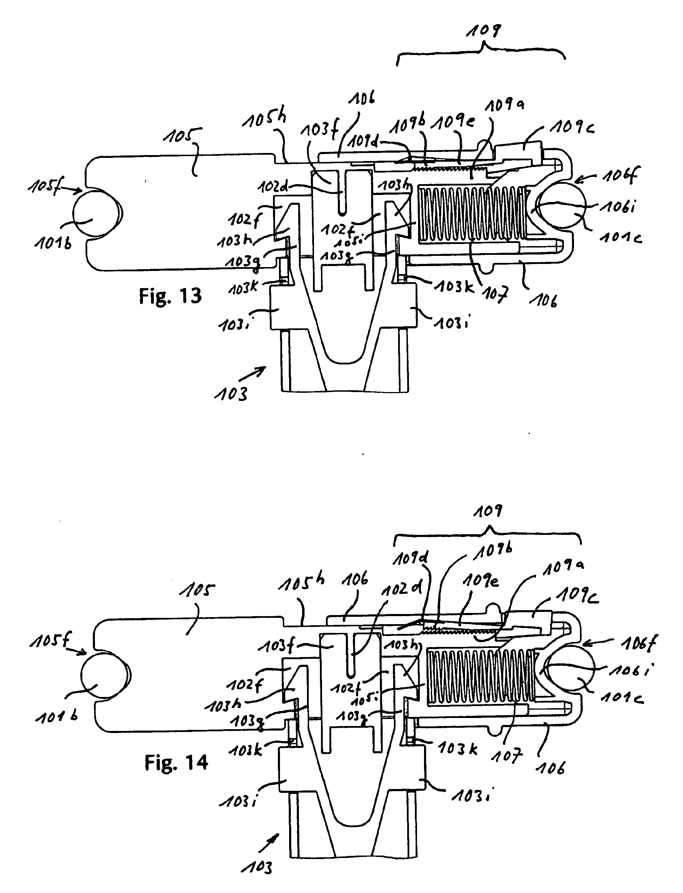

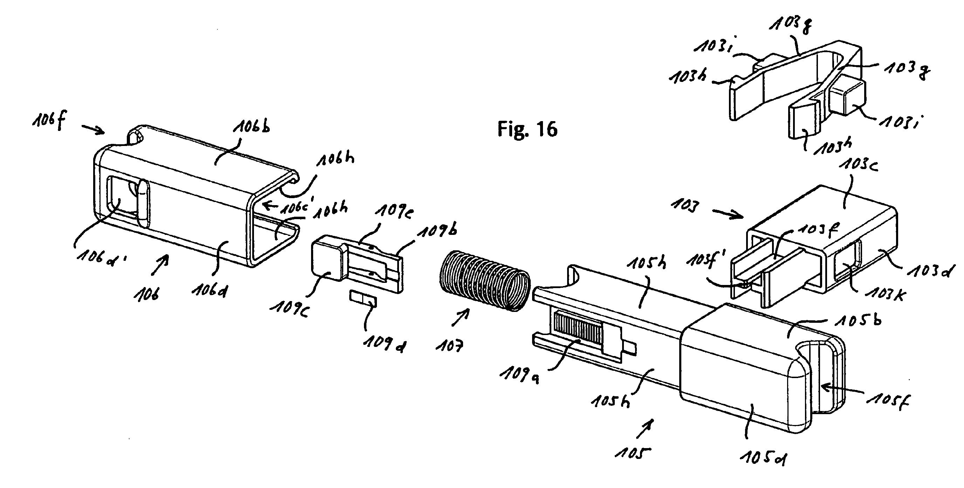

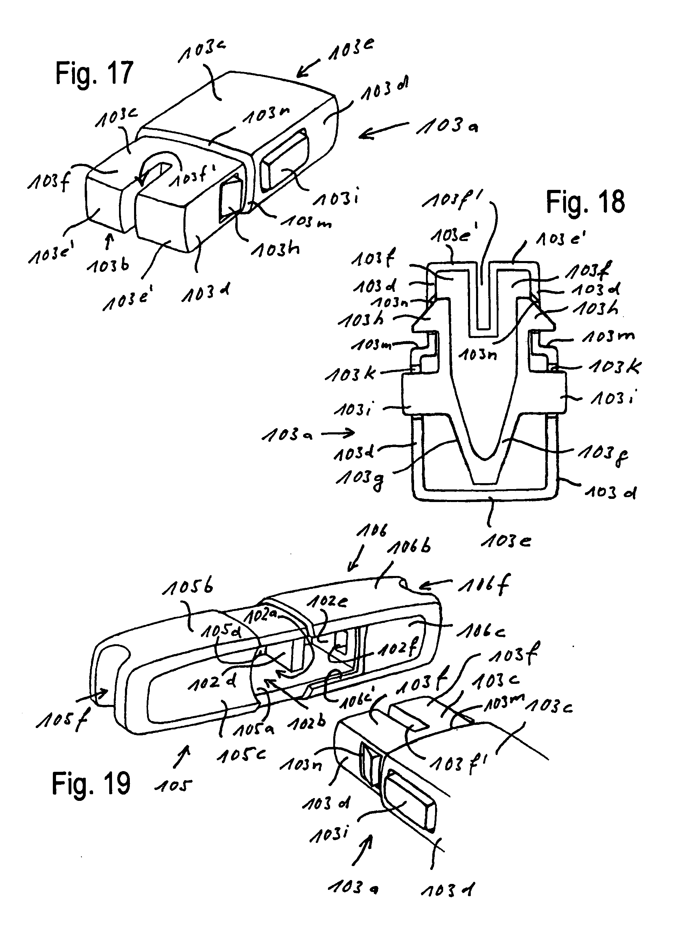

Fig. 13 und 14 zeigen die Funktion der Rastvorrichtung 109 in aktivierter (Fig. 13) und inaktivierter (Fig. 14) Stellung. Details der Rastvorrichtung sind auch in Fig. 16 und 17 gezeigt. Im abgesetzten Führungsabschnitt 105h der hinteren Seitenwand 105d des ersten Befestigungselements 105 ist die Zahnstange 109a angeordnet. An der hinteren Seitenwand 106d des zweiten Befestigungselements 106 ist eine Wippe 109e angelenkt, auf deren gegen das erste Befestigungselement 105 gerichteten Seite die Sperrklinke 109b und auf deren gegen die Ausnehmung 106 gerichteten Seite das Betätigungselement 109c angeordnet sind. In der hinteren Seitenwand 106d ist ein Durchbruch 106d' für das Betätigungselement 109c vorgesehen. Die Rastfeder 109d neigt die Wippe 109e so, dass die Sperrklinke109b im gefederten Eingriff mit der Zahnstange 109a steht. Die Zahnstange 109a weist eine Sägeverzahnung auf, so dass die Sperrklinke 109b (gemäss Funktion eines Rastgesperres) eine Bewegung des zweiten Befestigungselements 106 in Richtung gegen das erste Befestigungselement 105 sperrt und eine Bewegung des zweiten Befestigungselements 106 in Richtung weg vom ersten Befestigungselement 105 freigibt. Durch Druck auf das Betätigungselement 109c wird die Sperrklinke 109b gegen die Kraft der Rastfeder 109d ausser Eingriff mit der Zahnstange 109a gebracht, so dass die beiden Befestigungselemente 105, 106 gegeneinander bewegbar sind.

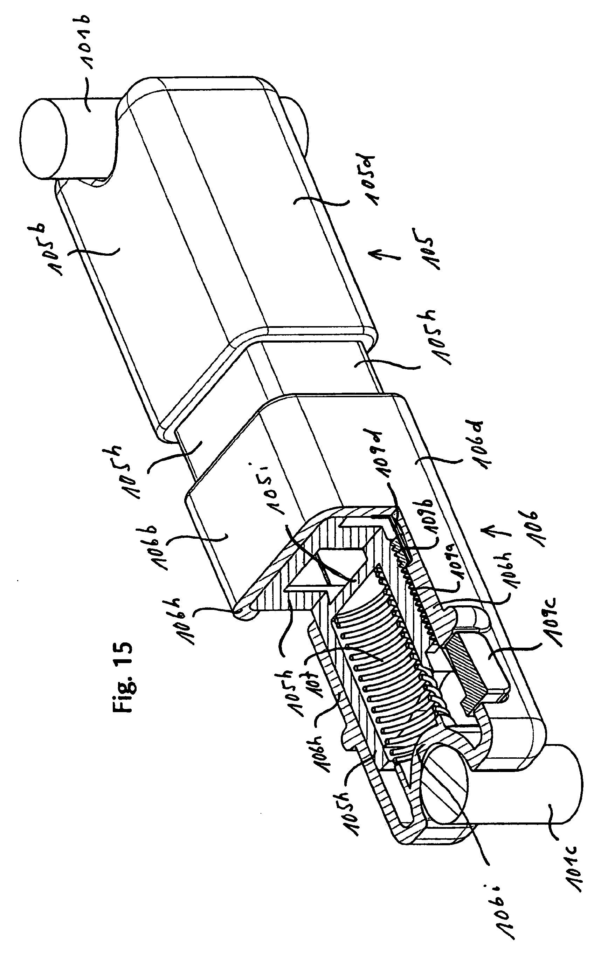

Fig. 15 zeigt den Aufbau der Linearführungen 105h, 106h, mit denen die beiden Befestigungselemente ineinander geführt sind, sowie die Spannfeder 107, die sich an der Abstützung 105i des ersten Befestigungselements 105 abstützt und das zweite Befestigungselement 106 an seiner Stirnwand 106i in Richtung gegen die Kopfstützenstange 101 c drückt.

Fig. 16 zeigt in einer Explosionsdarstellung die einzelnen Bauteile der Befestigungselemente 105, 106 und dem Steckelement 103a.

Fig. 17 bis 19 zeigen eine weitere Variante der Befestigungseinrichtung mit dem Steckelement 103a. Die Bodenwand 103b, die Deckenwand 103c, und die Seitenwände 103d, die das Gehäuse des Steckelements 103a bilden, sind bis über die beiden Rasthaken 103h hinaus nach vorne verlängert und mit der Stirnwand 103e' abgeschlossen, so dass das Steckelement 103a ein rundum geschlossenes Gehäuse aufweist.

An dem in der Aufnahmebuchse 102a aufgenommenen Führungselement 103f des Steckelements 103a sind die Bodenwand 103b, die Seitenwände 103d und die Deckenwand 103c etwas abgesetzt, so dass rundum ein Absatz 103m gebildet wird, der einen Anschlag zur Begrenzung der Einstecktiefe des Steckelements 103a in die Aufnahmebuchse 102a sowie einen Gegenanschlag für die Rasthaken 103h bildet. An den Seitenwänden 103d sind Durchbrüche 103n, durch die die Rasthaken 103h aus dem Gehäuse ragen, sowie Tastenöffnungen 103k für die Betätigungsorgane 103i vorgesehen.

In der Aufnahmebuchse 102a ist ein Führungssteg 102d angebracht, der die Bodenwand 105a, die hintere Seitenwand 105d und die Deckenwand 105b des ersten Befestigungselements 105 miteinander verbindet und die Stabilität der Aufnahmebuchse 102a erhöht und eine präzise und spielfreie Zentrierung des Führungselements 103f gewährleistet. Im Führungselement 103f des Steckelement 103a ist eine komplementäre Ausnehmung 103f zur Aufnahme des Führungsstegs 102d vorgesehen.

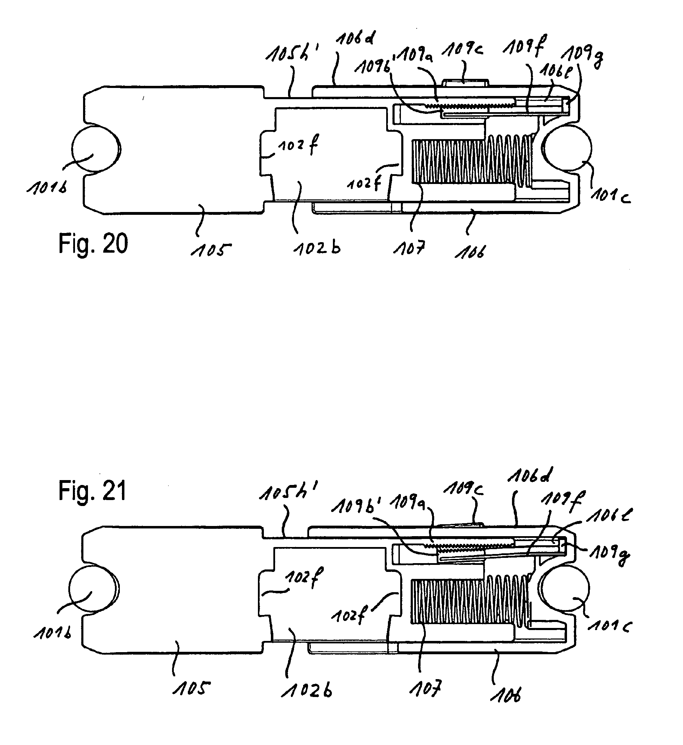

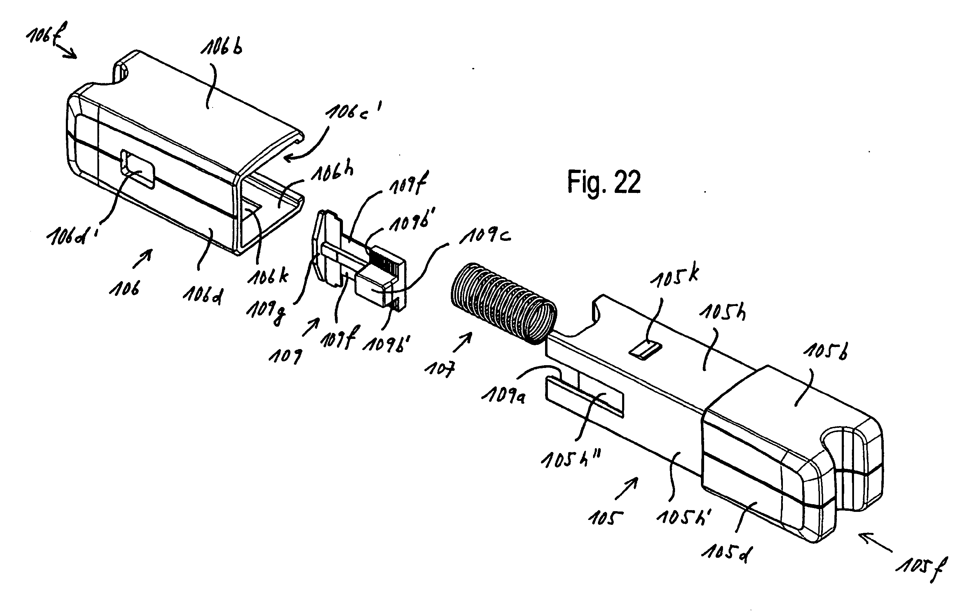

Fig. 20 bis 22 zeigen eine weitere Variante der Rastvorrichtung 109 zum Blockieren der Relativbewegung der beiden Befestigungselemente 105, 106 in aktiver (Fig. 20) und inaktivierter (Fig. 21) Stellung.

Auf der Innenseite der hinteren Seitenwand 106d des zweiten Befestigungselements 106 ist die Rastvorrichtung 109 angeordnet, die eine Blattfeder 109f umfasst, an deren gegen das erste Befestigungselement 105 gerichteten Ende ein Betätigungsorgan 109c mit beidseitig angeordneten, gegen die Innenseite der hinteren Seitenwand 106d gerichteten, Zahnsegmenten 109b' angeordnet ist und an deren gegen die Ausnehmung 106f gerichteten Ende eine Federhalterung 109g angeordnet ist, mit der die Blattfeder 109f in einer entsprechend ausgebildeten Aufnahmetasche 106l im zweiten Befestigungselement 106 befestigt wird. In der hinteren Seitenwand 106d ist eine Gehäuseausnehmung 106d' vorgesehen, durch die das Betätigungselement 109c hindurch ragt.

Im abgesetzten Führungsabschnitt 105h' der hinteren Seitenwand 105d des ersten Befestigungselements 105 ist eine Tastenausnehmung 105h" vorgesehen, in der sich das Betätigungsorgan 109f bei einer Relativbewegung der Befestigungselemente 105, 106 bewegen kann. Auf der Innenseite des Führungsabschnitts 105h' sind beidseitig der Längskanten der Tastenausnehmung 105h" nach innen gerichtete Zahnstangen 109a angeordnet, in welche die beiden Zahnsegmente 109b' am Betätigungsorgan 109c durch Druck der Blattfeder 109f in Eingriff gehalten werden.

Die Zähne der beiden Zahnstangen 109a und Zahnsegmenten 109b sind als Sägezähne ausgebildet, so dass sie gemeinsam ein Rastgesperre bilden, das eine Bewegung der beiden Befestigungselemente 105, 106 gegeneinander sperrt und eine Bewegung der beiden Befestigungselemente 105, 106 auseinander freigibt. Damit die beiden Befestigungselement 105, 106 (beispielsweise zum Montieren oder Demontieren der Befestigungseinrichtung) gegeneinander gedrückt werden können, müssen die Zahnsegmente 109b durch Drücken des Betätigungsorgans 109c ausser Eingriff mit den Zahnstangen 109a gebracht werden.

Zur Begrenzung des Hubs zwischen dem ersten und dem zweiten Befestigungselement 105, 106 sind am abgesetzten Führungsabschnitt 105h der Deckenwand 105b und der Bodenwand 105a des ersten Befestigungselements 105 Endanschläge 105k und auf den Innenseiten von Deckenwand 106b und Bodenwand 106a des zweiten Befestigungselements 106 Gegenanschläge 106k vorgesehen.

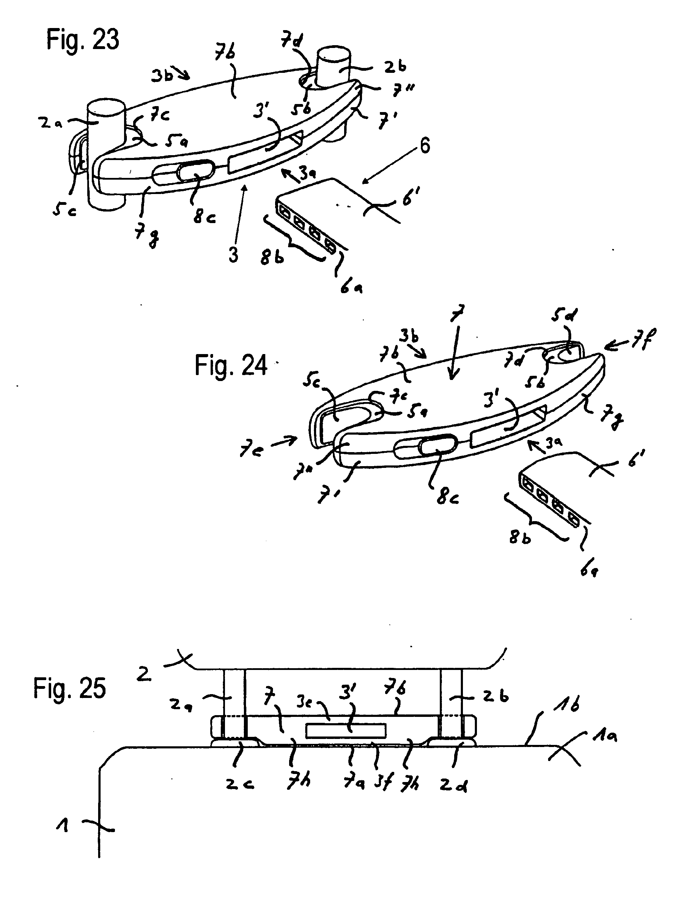

Fig. 23 und 24 zeigen eine vierte Variante der erfindungsgemässen Befestigungseinrichtung. Das plattenförmige Gehäuse 7 umfasst eine untere Gehäuseschale 7' und eine obere Gehäuseschale 7", welche in etwa die Kontur einer Ellipse aufweisen. An den schmalen Stirnseiten der beiden Gehäuseschalen 7', 7" sind Stangenöffnungen 7e, 7f angeordnet, in denen die Kopfstützenstangen 2a, 2b aufgenommen werden. Auf den Breitseiten 7a, 7b der Gehäuseschalen 7', 7" sind endsprechende Ausnehmungen 7c, 7d für die Kopfstützenstangen 2a, 2b vorgesehen.

Mittig zwischen den Kopfstützenstangen 2a, 2b ist die Aufnahmebuchse 3' im Gehäuse 7 untergebracht, deren Längsachse senkrecht zu einer Verbindungslinie der Kopfstützenstangen 2a, 2b verläuft. Die Einstecköffnungen 3a, 3b der Aufnahmebuchse 3' für das Steckelement 6' fluchten mit der konvex gekrümmten Aussenwand 7g des Gehäuses 7. Die untere und die obere Breitseite 7a, 7b des Gehäuses 7 sowie die Bodenwand 3f und die Deckenwand 3e verlaufen im Wesentlichen horizontal und parallel zueinander.

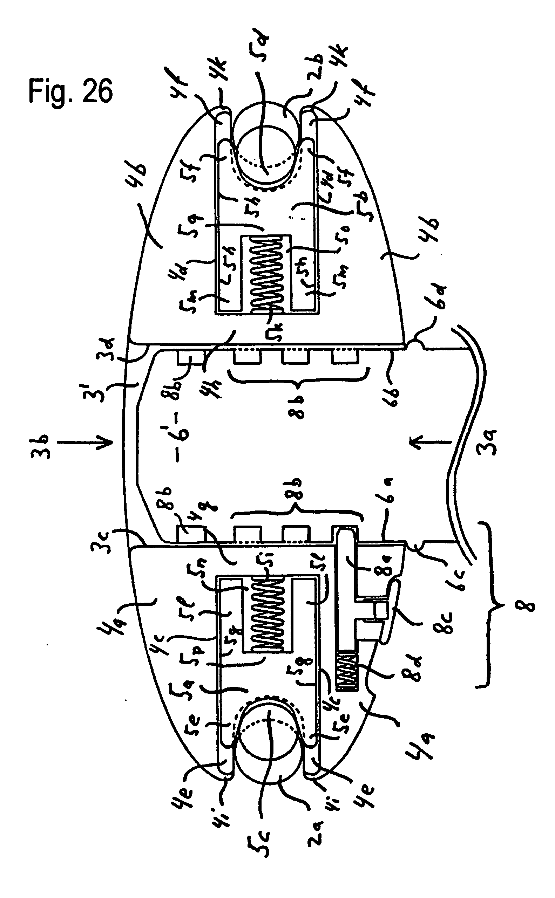

An den Seitenwänden 6a, 6b des Steckelements 6' sind mehrerer Ausnehmungen 8b hintereinander angeordnet, in welche die Falle 8 unter Einwirkung der Fallenfeder 8d einrasten kann, so dass das Steckelement 6' in unterschiedlichen Positionen in der Aufnahmebuchse 3' arretiert werden kann (Fig. 26). Die Verriegelungsvorrichtung 8 kann mit dem an der Aussenwand 7g des Gehäuses 7 zugänglichen Betätigungsorgan 8c gelöst werden.

Fig. 25 zeigt eine Variante der Ausbildung des Gehäuses 7. Auf der Oberseite 1b der Rückenlehne 1a sind Rosetten 2c, 2d angeordnet, in denen die Kopfstützenstangen 2a, 2b geführt sind. Auf der gegen die Oberseite 1b der Rückenlehne 1a gerichteten Seite des Gehäuses 7 ist eine Auskragung 7h angeordnet, die sich zwischen den Rosetten 2c, 2d bis zur Oberseite 1 b der Rückenlehne 1a erstreckt. Die Aufnahmebuchse 3' ist zwischen der unteren Breitseite 7a und der oberen Breitseite 7b des Gehäuses 7 eingemittet, so dass die Deckenwand 3e und die Bodenwand 3f der Aufnahmebuchse 3' die gleichen Wandstärken aufweisen.

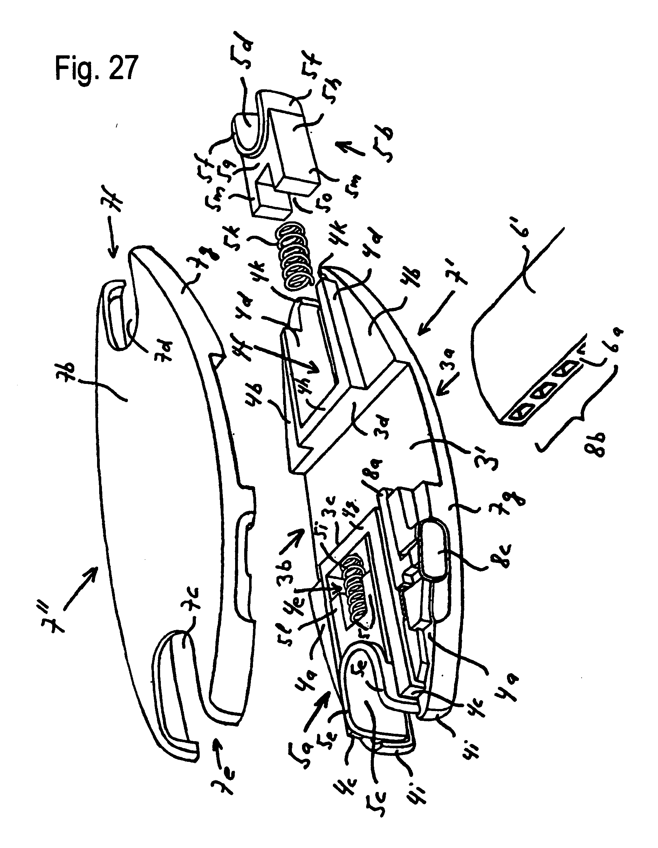

Fig. 26 und 27 zeigen den inneren Aufbau der Befestigungseinrichtung. Seitlich neben der Aufnahmebuchse 3' sind Befestigungselementabschnitte 4a, 4b im Gehäuse 7 untergebracht. An den Befestigungselementabschnitten 4a, 4b sind Führungen 4c, 4d angeordnet, welche die Führungskanäle 4e, 4f zur Aufnahme von Spannelementen 5a, 5b bilden. Die Längsachsen von Aufnahmebuchse 3' und Führungskanälen 4e, 4f sind kreuzförmig angeordnet und stehen senkrecht zueinander.

An den gegen die Kopfstützenstangen 2a, 2b gerichteten Enden der Spannelemente 5a, 5b sind U-förmige Gabeln 5c, 5d angeordnet, deren Schenkel 5e, 5f sich an den Kopfstützenstangen 2a, 2b abstützen.

Die Seitenwände 5g, 5h der Spannelemente 5a, 5b bilden die Führungen, mit denen die Spannelemente 5a, 5b in den Führungskanälen 4e, 4f geführt sind. Auf den gegen die Aufnahmebuchse 3' gerichteten Seiten werden die Führungskanäle 4e, 4f durch Abschlusswände 4g, 4h verschlossen. Auf den gegen die Kopfstützenstangen 2a, 2b gerichteten Seiten werden die Ausschubwege der Spannelemente 5a, 5b durch Anschläge 4i, 4k begrenzt.

Zwischen den Führungsholmen 51, 5m der Spannelemente 5a, 5b sind Freiräume 5n, 5o vorgesehen, in denen Druckfedern 5i, 5k angeordnet sind, welche sich an den Abschlusswänden 4g, 4h abstützen und die Spannelemente 5a, 5b an den hinter den Gabeln 5c, 5d angeordneten Querwänden 5p, 5q in Richtung der Kopfstützenstangen 2a, 2b drücken.

Die Höhe der Schenkel 5e, 5f der Gabeln 5c, 5d überragt die Höhe der Spannelemente 5a, 5b unten und oben und entspricht der äusseren Höhe des Gehäuses 7. Die Ausnehmungen 7c, 7d in der unteren und oberen Gehäuseschale 7', 7" sind so bemessen, dass die kragenförmigen Überstände der Schenkel 5e, 5f sich zwischen ihren inneren und äusseren Endstellungen frei bewegen können.

Das Steckelement 6' kann durch die erste Einstecköffnung 3a oder durch die zweite Einstecköffnung 3b in die Aufnahmebuchse 3' eingeführt werden. An den Seitenwänden 6a, 6b des Steckelements 6' sind Ausnehmungen 8b angeordnet, in die die Falle 8a der Verriegelungsvorrichtung 8 in unterschiedlichen Einstecktiefen einrasten kann. Anschläge 6c, 6d begrenzen die Einstecktiefe des Steckelements 6', so dass dieses nicht über die Einstecköffnungen 3a, 3b hinausragen kann.

Die Falle 8a wird mit der Fallenfeder 8d in die Ausnehmungen 8b des Steckelements 6' gedrückt. Zum Lösen der Verriegelungsvorrichtung 8 kann die Falle 8a mittels dem in der Seitenwand 7g neben der ersten Einstecköffnung 3a angeordneten Betätigungsorgan 8c aus den Ausnehmungen 8b bewegt werden.

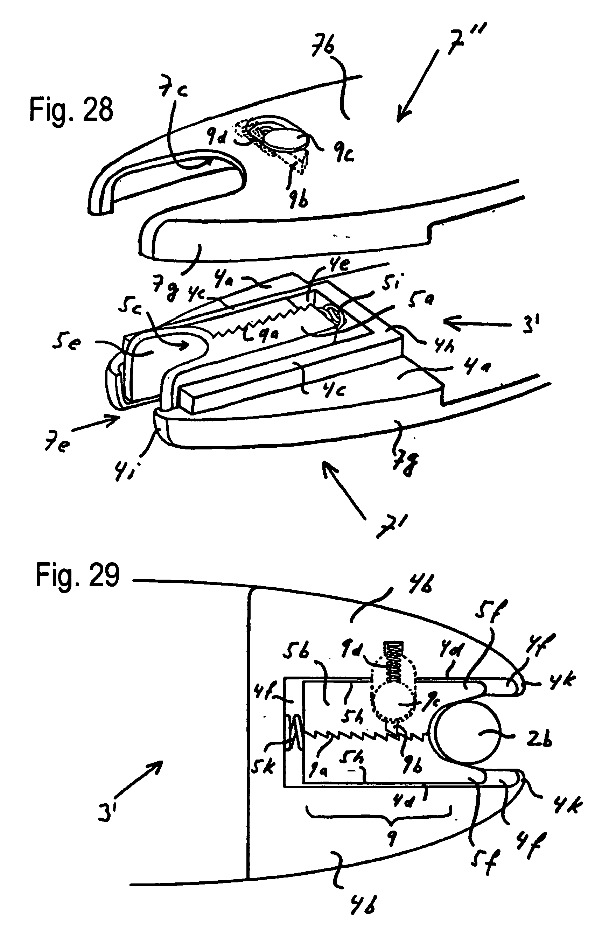

Fig. 28 und 29 zeigen eine Rastvorrichtung 9, mit denen die Spannelemente 5a, 5b im Gehäuse 7 blockierbar sind. Auf der Oberseite der Spannelemente 5a, 5b sind Zahnstangen 9a angeordnet, die sich parallel zu den Bewegungsrichtungen der Spannelemente 5a, 5b erstrecken. An der oberen Gehäuseschale 7" sind Sperrklinken 9b angeordnet, die quer zur Bewegungsrichtung der Zahnstangen 9a bewegbar gelagert sind und mit Rastfedern 9d im Eingriff mit den Zahnstangen 9a gehalten werden. Die Zähne der Zahnstangen 9a und die Sperrklinken 9b sind so ausgebildet, dass sich die Spannelemente 5a, 5b unter dem Einfluss der Druckfedern 5i, 5k frei in Richtung der Kopfstützenstange 2a, 2b bewegen können, in Richtung der Aufnahmebuchse 3' jedoch gesperrt werden. Mit den Betätigungselementen 9c können die Sperrklinken 9b ausser Eingriff mit den Zahnstangen 9a gebracht werden, so dass die Spannelemente 5a, 5b gegen die Aufnahmebuchse 3' bewegt werden können.

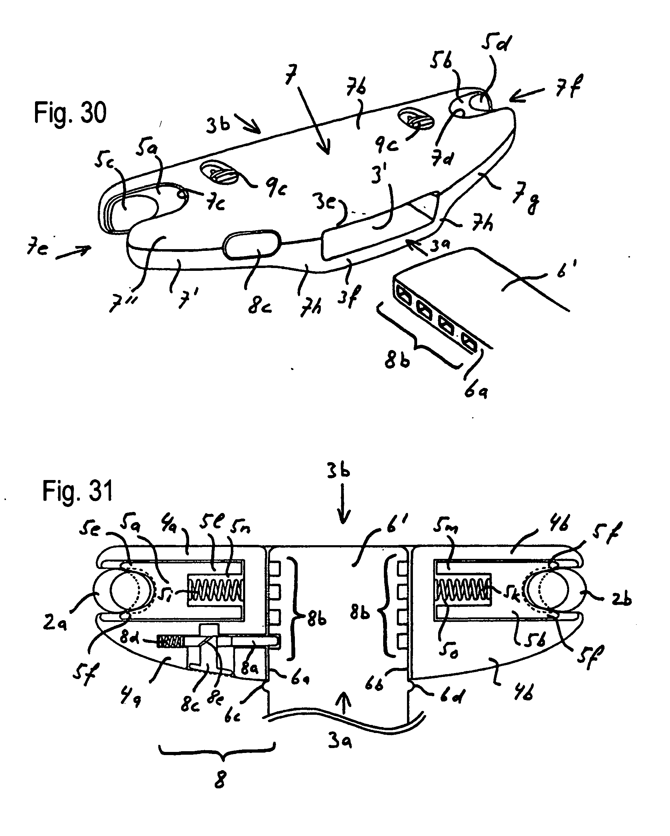

Fig. 30 und 31 zeigen eine fünfte Variante der erfindungsgemässen Befestigungseinrichtung. Die Form des Gehäuses 7 ist bei dieser Variante bezüglich Position der Stangenöffnungen 7e, 7f asymmetrisch gestaltet. Der Überstand des Gehäuses 7 über die Kopfstützenstangen 2a, 2b ist auf der Seite der ersten Einstecköffnung 3a grösser als auf der Seite der Einstecköffnung 3b und die Kontur des Gehäuses 7 ist auf der Seite der Einstecköffnung 3a konvex gekrümmt, während sie auf der Seite der Einstecköffnung 3b in etwa parallel zu einer Verbindungsebene der Kopfstützenstangen 2a, 2b verläuft. Im Bereich der Aufnahmebuchse 3' ist an der unteren Gehäuseschale 7' eine Auskragung 7h angeordnet. Das Betätigungsorgan 8c ist als Drucktaste ausgebildet und über eine Schräge 8e in Wirkverbindung mit der Falle 8a.

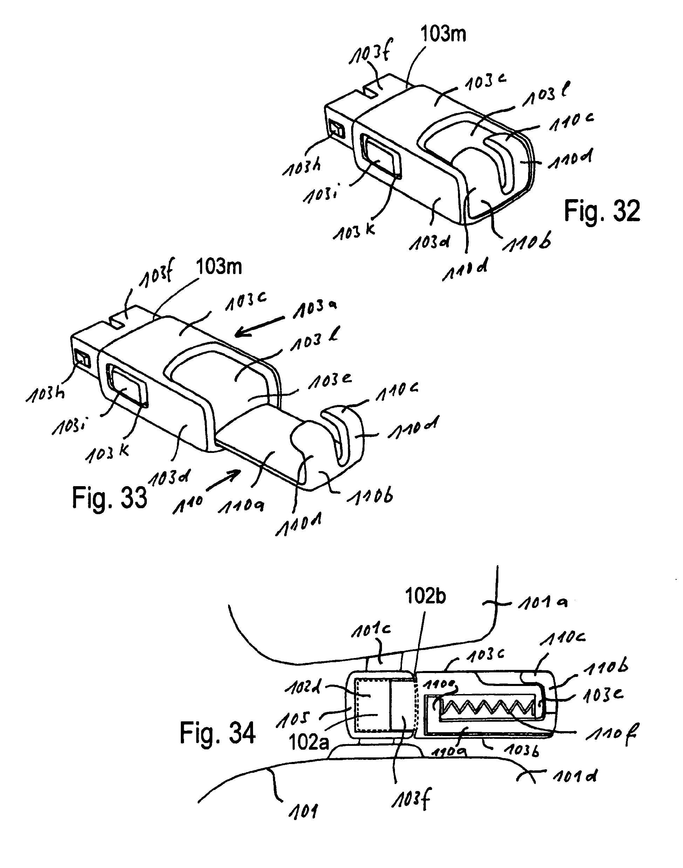

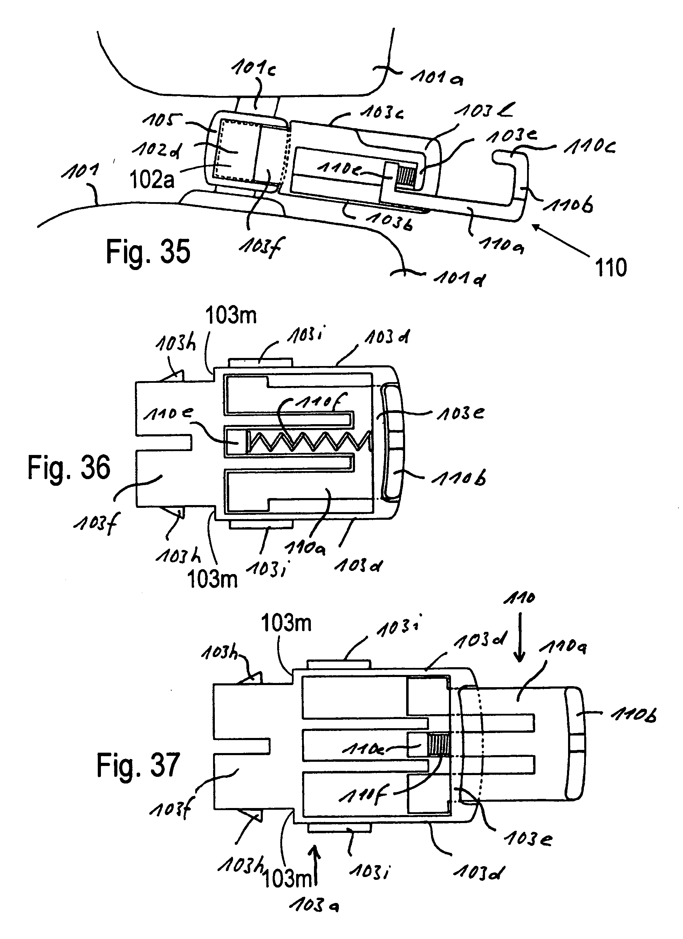

Fig. 32 bis 37 zeigen eine weitere Variante des Steckelements 103a mit einem ausziehbaren Trägerarm 110. Das Steckelement 103a umfasst ein Gehäuse mit der Bodenwand 103b, den beiden Seitenwänden 103d, der Stirnwand 103e, der Deckenwand 103c und dem Führungselement 103f. Im Gehäuse ist ein ausziehbarer Trägerarm 110 untergebracht, der zwischen einer Nichtgebrauchsstellung, in der er im Wesentlichen im Gehäuse aufgenommen ist (Fig. 32, 34, 36) und einer Gebrauchsstellung (Fig. 33, 35, 37), in der er zum Aufhängen von Gegenständen, wie bspw. Taschen, Mappen und Kleiderbügeln, über die Rückenlehne 101d des Fahrzeugsitzes 101 hinausragt, beweglich ist.

Der Trägerarm 110 umfasst eine Bodenwand 110a sowie eine am vorderen Ende der Bodenwand 110a angeordnete, in etwa vertikal verlaufende Abschlusswand 110b, an deren oberem Ende ein in etwa parallel zur Bodenwand 110a verlaufender, gegen das Steckelement 103a gerichteter Niederhalter 110c angeordnet ist. Die Abschusswand 110b und der Niederhalter 110c sind in der Mitte geschlitzt, so dass die beiden Abschnitte 110d sowohl in der Gebrauchsstellung als auch in der Nichtgebrauchsstellung des Trägerarms 110 als Kleiderhaken benutzt werden können.

Die Bodenwand 110a des Trägerarms 110 ist linear beweglich an der Bodenwand 103b des Steckelements 103a geführt, wobei die Bewegungsrichtung parallel zur Einsteckrichtung des Steckelements 103a in die Aufnahmebuchse 102a erfolgt.

Am hinteren Ende der Bodenwand 110a ist ein Abstützelement 110e angeordnet, wobei zwischen der Stirnwand 103e des Steckelements 103a und dem Abstützelement 110e eine Druckfeder 110f eingespannt ist, die den Trägerarm 110 in die Nichtgebrauchsstellung vorspannt und bei Nichtgebrauch ins Gehäuse einzieht.

An der Aussenseite der Stirnwand 103e und der Deckenwand 103c des Steckelements 103a ist eine muldenförmige Vertiefung 103l ausgebildet, in der die Abschlusswand 110b und der Niederhalter 110c des Trägerarms110 in der Nichtgebrauchsstellung aufgenommen sind.

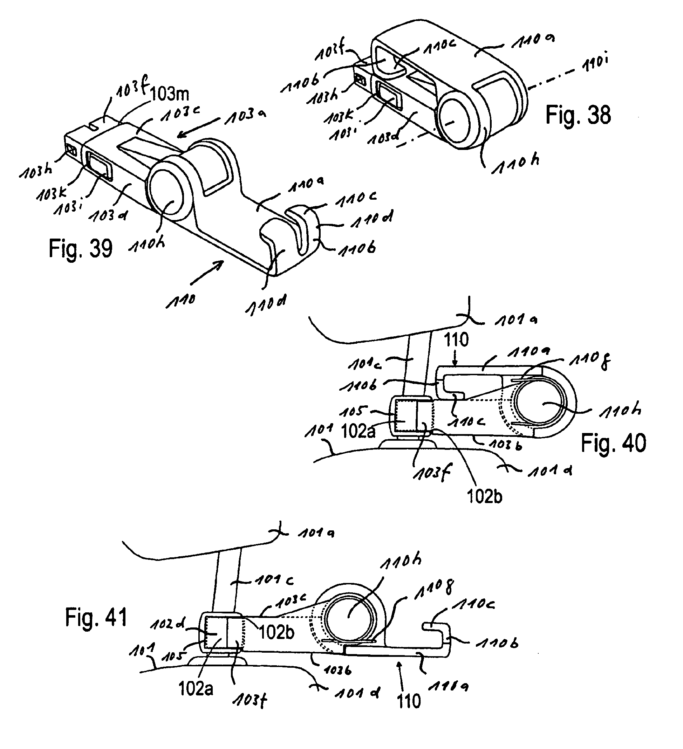

Fig. 38 bis 41 zeigen noch eine weitere Variante des Steckelements 103a. Der Trägerarm 110 ist über ein am hinteren Ende der Bodenwand 110a angeordnetes Gelenk 110h mit einer im Wesentlichen parallel zur Verbindungslinie 100 verlaufenden Drehachse 110i mit dem Steckelement 103a verbunden und mit einer Schenkelfeder 110g in die Nichtgebrauchsstellung vorgespannt, in der der Trägerarm 110 mit dem Niederhalter 110c gegen das Steckelement 103a gerichtet im Wesentlichen kongruent zur Deckenwand 103c des Steckelements 103a an dieser anliegt (Fig. 38 und 41). Zum Gebrauch wird der Trägerarm 110 gegen die Kraft der Schenkelfeder 110g in die Gebrauchsstellung (Fig. 39 und 41) ausgeklappt und durch das Gewicht von aufgehängten Gegenständen in dieser Stellung gehalten.

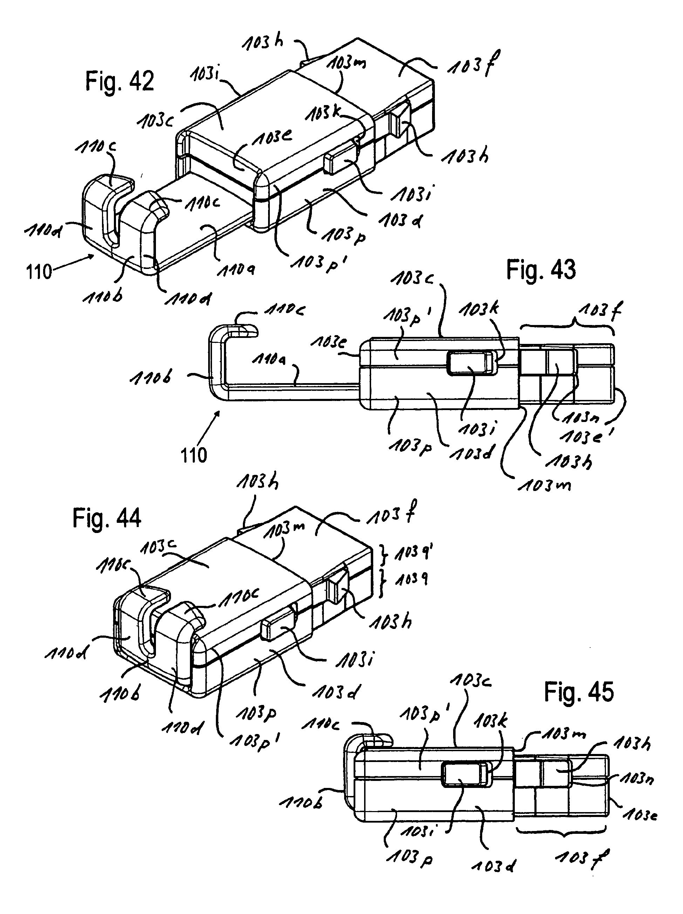

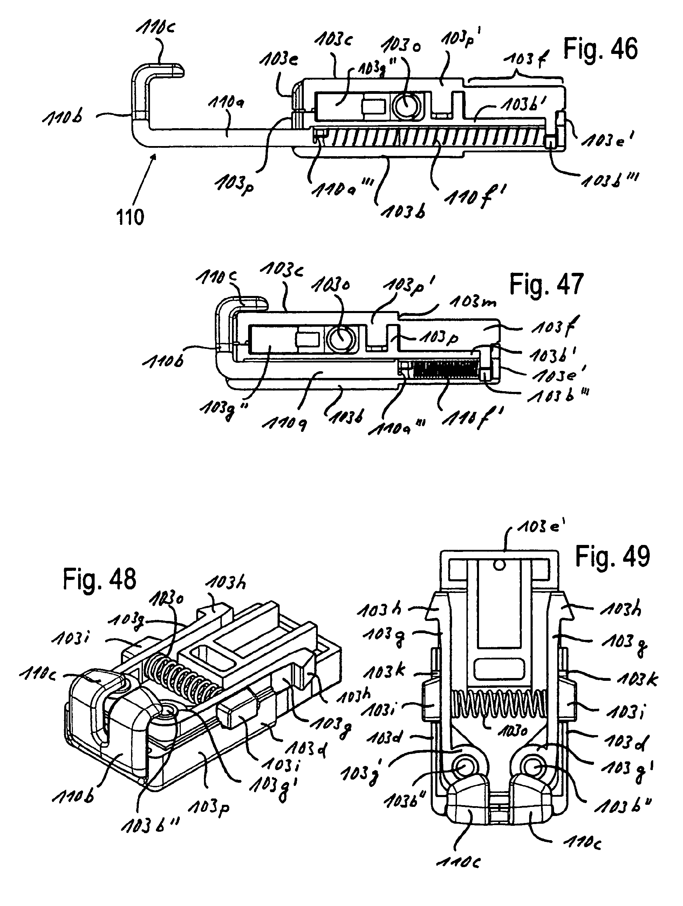

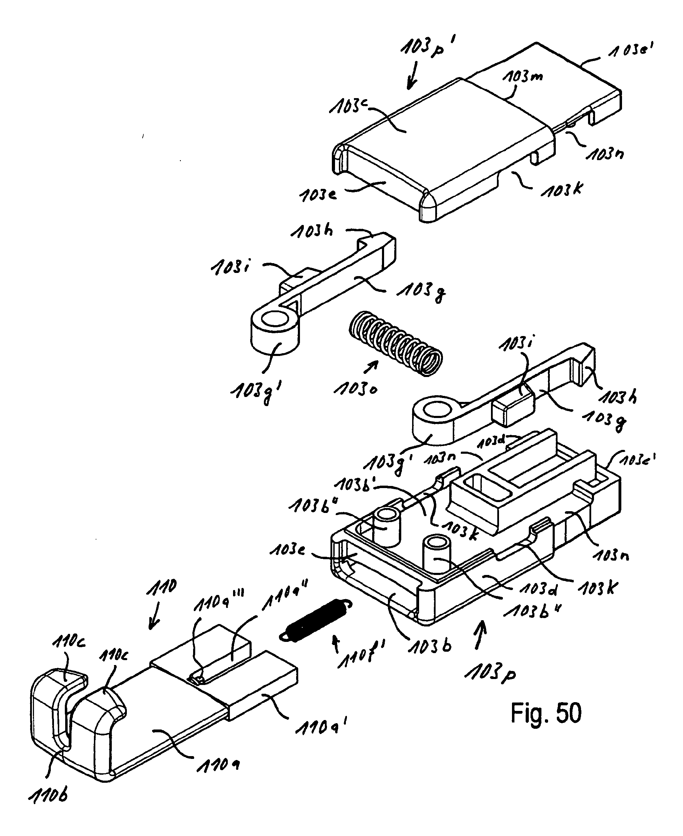

Fig. 42 bis 50 zeigen noch eine weitere Variante des Steckelements 103a mit integriertem Trägerarm 110. Das Steckelement 103a umfasst ein Gehäuse-Unterteil 103p mit einer Bodenwand 103b, einem Zwischenboden 103b' und Teilen der beiden Seitenwände 103d, sowie der hinteren Stirnwand 103e und der vorderen Stirnwand 103e' und einen Deckel 103p' mit der Deckenwand 103c und Teilen der beiden Seitenwände 103d, sowie der hinteren Stirnwand 103e und der vorderen Stirnwand 103e. Das Gehäuse-Unterteil 103p ist zur besseren Zugänglichkeit bei der Montage zweiteilig, mit separater Bodenwand 103b, ausgebildet.

Der Zwischenboden 103b' unterteilt das Steckelement 103a in zwei übereinanderliegende Aufnahmeräume 103q, 103q' (Fig. 44). Im unteren Aufnahmeraum 103q sind der linear ausziehbare Trägerarm 110 mit dem Führungsabschnitt 110a' sowie die Zugfeder 110f' zum Einziehen des Trägerarms 110a in den Aufnahmeraum 103q aufgenommen und im oberen Aufnahmeraum 103q' ist die Verriegelungsmechanik 103g, 103g', 103h, 103i, 103o, 103b" des Steckelement 103a untergebracht. Beide Aufnahmeräume 103q, 103q' erstrecken sich im Wesentlichen über die Gesamtläge des Steckelements 103a, inklusive dem Führungselement 103f, der in die Aufnahmebuchse 102a des ersten Befestigungselements 105 eingesteckt wird. Dadurch steht eine lange Führungs- und Auszugslänge für den Trägerarm 110 zur Verfügung, ohne dass die Länge des Steckelements 103a über die für die Verriegelungsmechanik 103g, 103g', 103h, 103i, 103o, 103b" notwendige Länge hinaus vergrössert werden muss.

Der Trägerarm 110 ist zwischen einer Nichtgebrauchsstellung, in der er im Wesentlichen im Aufnahmeraum 103q aufgenommen ist (Fig. 44, 45, 47) und einer Gebrauchsstellung (Fig. 42, 43, 46), in der er zum Aufhängen von Gegenständen, wie bspw. Taschen, Mappen und Kleiderbügeln, über die Rückenlehne 101d des Fahrzeugsitzes 101 hinausragt, beweglich.

Der Trägerarm 110 umfasst eine Bodenwand 110a mit einem Führungsabschnitt 110a' am hinteren Ende der Bodenwand 110a sowie eine am vorderen Ende der Bodenwand 110a angeordnete, in etwa vertikal verlaufende Abschlusswand 110b, an deren oberem Ende ein in etwa parallel zur Bodenwand 110a verlaufender, gegen das Steckelement 103a gerichteter Niederhalter 110c angeordnet ist. Die Abschlusswand 110b und der Niederhalter 110c sind in der Mitte geschlitzt, so dass die beiden Abschnitte 110d sowohl in der Gebrauchsstellung als auch in der Nichtgebrauchsstellung des Trägerarms 110 als Kleiderhaken benutzt werden können.

Die Bodenwand 110a des Trägerarms 110 ist mit dem Führungsabschnitt 110a', der auch den Endanschlag zur Begrenzung des Auszugswegs bildet, linear beweglich an der Bodenwand 103b des Steckelements 103a geführt, wobei die Bewegungsrichtung parallel zur Einsteckrichtung des Steckelements 103a in die Aufnahmebuchse 102a erfolgt.

In der Mitte des Führungsabschnitts 110a ist ein Federausschnitt 110a" mit einer ersten Federaufhängung 110a"' vorgesehen, an der ein Ende der Zugfeder 110f' festgemacht ist, deren anderes Ende an einer am Zwischenboden 103b' angeordneten zweiten Federaufhängung 103b'" festgemacht ist. Die Zugfeder zieht den Trägerarm 110 bei Nichtgebrauch in den Aufnahmeraum 103q zurück.

Die im oberen Aufnahmeraum 103q' untergebrachte Verriegelungsmechanik 103g, 103g', 103h, 103i, 103o, 103b" des Steckelement 103a umfasst die beiden Federarme 103g an deren hinteren Enden Lageraugen 103g' angeordnet sind, mit denen die Federarme 103g auf Lagerzapfen 103b", die am Zwischenboden 103b' angeordnet sind, drehbar gelagert werden.

An den vorderen Enden der Federarme 103g sind die Rasthaken 103h angeordnet, die durch Durchbrüche 103n in den Seitenwänden 103d nach aussen ragen. Etwa mittig zwischen den Rasthaken 103h und den Lageraugen 103g' sind an den Federarmen 103g Betätigungsorgane 103i angeordnet, welche durch Tastenöffnungen 103k in den Seitenwänden 103d nach aussen ragen.

Zwischen den beiden Federarmen103g ist die Verriegelungsfeder 103o eingespannt, welche die Federarme 103g gegen die Seitenwände 103d drückt, welche die Anschläge bilden. Durch Zusammendrücken der beiden Betätigungsorgane 103i werden die Rasthaken 103h nach innen bewegt und die Verriegelung gelöst.

## Patentansprüche

1. Befestigungseinrichtung zum Anschliessen einer Vorrichtung an zwei voneinander beabstandeten Kopfstützenstangen (101b, 101c) eines Fahrzeugsitzes (101),
mit einem ersten Kupplungselement (102, 102a) zur Aufnahme eines an der Vorrichtung angeordneten oder anordenbaren zweiten Kupplungselements (103, 103a) sowie einem am ersten Kupplungselement (102, 102a) angeordneten ersten Befestigungselement (105), und einem mit dem ersten Befestigungselement (105) beweglich verbundenen zweiten Befestigungselement (106),
wobei mit den Befestigungselementen das erste Kupplungselement (102, 102a) an den Kopfstützenstangen (101 b, 101 c) befestigbar ist,
wobei sich das erste Befestigungselement (105) und das zweite Befestigungselement (106), bei an die Kopfstützenstangen angeschlossener Vorrichtung, an den Kopfstützenstangen (101b, 101c) abstützen und parallel zu einer in etwa horizontal zwischen den Zentren der Kopfstützenstangen (101b, 101c) verlaufenden Verbindungslinie (100) relativ zueinander beweglich sind, und
wobei eine Rastvorrichtung (109), mittels der die Relativbewegung zwischen dem ersten und dem zweiten Befestigungselement (105, 106) blockierbar ist, derart vorgesehen ist, dass eine Bewegung der Befestigungselemente (105, 106) in Richtung hin zu den Kopfstützenstangen zugelassen und eine Bewegung der Befestigungselemente (105, 106) in Richtung weg von den Kopfstützenstangen gesperrt ist.

2. Befestigungseinrichtung nach Anspruch 1, **dadurch gekennzeichnet, dass** ein Betätigungselement (109c) vorgesehen ist, über das die Rastvorrichtung (109) zur Bewegung der Befestigungselemente (105, 106) in Richtung weg von den Kopfstützenstangen gelöst wird.

3. Befestigungseinrichtung nach Anspruch 2, **dadurch gekennzeichnet, dass** die Rastvorrichtung (109) als Rastgesperre mit einer Zahnstange mit Sägeverzahnung (109a) und einer im Eingriff mit der Zahnstange (109a) stehenden gefederten Sperrklinke (109b, 109b') ausgebildet ist, wobei die Sperrklinke (109b, 109b') mittels des Betätigungselements (109c) ausser Eingriff mit der Zahnstange (109a) gebracht werden kann.

4. Befestigungseinrichtung nach Anspruch 3, wobei die Zahnstange (109a) am ersten Befestigungselement (105) und die Sperrklinke (109b, 109b') mit dem Betätigungselement (109c) am zweiten Befestigungselement (106) angeordnet sind.

5. Befestigungseinrichtung nach Anspruch 4, **dadurch gekennzeichnet, dass** das erste Kupplungselement (102) als Aufnahmebuchse (102a) und das zweite Kupplungselement (103) als Steckelement (103a) ausgebildet ist,
wobei die Aufnahmebuchse (102a) im Innenraum des ersten Befestigungselements (105) angeordnet und mit einer an einer Seitenwand (105c, 105d) des ersten Befestigungselements (105) angeordneten Öffnung (102b) zum Einführen des Steckelements (103a) versehen ist,
und wobei die Zahnstange (109a) an einer der Öffnung (102b) gegenüberliegenden hinteren Seitenwand (105d, 105h, 105h') des ersten Befestigungselements (105) angeordnet ist.

6. Befestigungseinrichtung nach Anspruch 5, **dadurch gekennzeichnet, dass** das Betätigungselement (109c) als Drucktaste ausgebildet und an einer der Öffnung (102b) gegenüberliegenden hinteren Seitenwand (106d) des zweiten Befestigungselements (106) angeordnet ist,
wobei in der hinteren Seitenwand (106d) eine Gehäuseausnehmung (106d') vorgesehen ist, durch die das Betätigungselement (109c) hindurch ragt.

7. Befestigungseinrichtung zum Anschliessen einer Vorrichtung an zwei voneinander beabstandeten Kopfstützenstangen (2a, 2b) eines Fahrzeugsitzes (1),
mit einem ersten Kupplungselement (3, 3') zur Aufnahme eines an der Vorrichtung angeordneten oder anordenbaren zweiten Kupplungselements (6, 6')
sowie am ersten Kupplungselement (3, 3') angeordneten Befestigungselementen, mit denen das erste Kupplungselement (3, 3') an den Kopfstützenstangen (2a, 2b) befestigbar ist,
wobei die Befestigungselemente Spannelemente (5a, 5b) umfassen, welche parallel zu einer Verbindungslinie der Kopfstützenstangen (2a, 2b) in entgegengesetzte Richtungen in einem Gehäuse (7) beweglich sind und sich bei an die Kopfstützenstangen angeschlossener Vorrichtung an den Kopfstützenstangen (2a, 2b) abstützen,
wobei Rastvorrichtungen (9), mittels denen die Spannelemente (5a, 5b) im Gehäuse (7) blockierbar sind,
derart vorgesehen sind, dass eine Bewegung der Spannelemente (5a, 5b) in Richtung hin zu den Kopfstützenstangen zugelassen und eine Bewegung der Spannelemente (5a, 5b) in Richtung weg von den Kopfstützenstangen gesperrt ist.

8. Befestigungseinrichtung nach Anspruch 7, **dadurch gekennzeichnet, dass** Betätigungselemente (9c) vorgesehen sind, über die die Rastvorrichtungen (9) zur Bewegung der Spannelemente (5a, 5b) in Richtung weg von den Kopfstützenstangen gelöst werden.

9. Befestigungseinrichtung Anspruch 7 oder 8, **dadurch gekennzeichnet, dass** die Spannelemente (5a, 5b) mittels Federn (5i, 5k) gegen die Kopfstützenstangen (2a, 2b) vorgespannt sind.

10. Befestigungseinrichtung Anspruch 7, 8 oder 9, **dadurch gekennzeichnet, dass** im Gehäuse (7) eine Aufnahmebuchse (3') vorgesehen ist, wobei seitlich neben der Aufnahmebuchse (3') Befestigungselementabschnitte (4a, 4b) im Gehäuse (7) untergebracht sind, an denen Führungen (4c, 4d) angeordnet sind, welche Führungskanäle (4e, 4f) zur Aufnahme der Spannelemente (5a, 5b) bilden.

11. Befestigungseinrichtung zum Anschliessen einer Vorrichtung an zwei voneinander beabstandeten Kopfstützenstangen (101b, 101c) eines Fahrzeugsitzes (101),
auch nach einem der vorhergehenden Ansprüche,
mit einem ersten Kupplungselement (102, 102a) zur Aufnahme eines an der Vorrichtung angeordneten oder anordenbaren zweiten Kupplungselements (103, 103a), sowie einem am ersten Kupplungselement (102, 102a) angeordneten ersten Befestigungselement (105), und einem mit dem ersten Befestigungselement (105) beweglich verbundenen zweiten Befestigungselement (106), mit denen das erste Kupplungselement (102, 102a) an den Kopfstützenstangen (101 b, 101 c) befestigbar ist,
wobei sich das erste Befestigungselement (105) und das zweite Befestigungselement (106), bei an die Kopfstützenstangen angeschlossener Vorrichtung, an den Kopfstützenstangen (101 b, 101 c) abstützen und parallel zu einer in etwa horizontal zwischen den Zentren der Kopfstützenstangen (101b, 101c) verlaufenden Verbindungslinie (100) relativ zueinander beweglich sind,
wobei das erste Kupplungselement (102) als Aufnahmebuchse (102a) und das zweite Kupplungselement (103) als Steckelement (103a) ausgebildet ist, wobei die Aufnahmebuchse (102a) vorzugsweise mittig zwischen den beiden Kopfstützenstangen (101b, 101c) angeordnet ist und die Einsteckrichtung des Steckelements (103a) in die Aufnahmebuchse (102a) in etwa senkrecht zur Verbindungslinie (100) verläuft,
wobei das erste und das zweite Befestigungselement (105, 106) über eine Linearführung (105h, 106h) verbunden sind, und
wobei die Aufnahmebuchse (102a) im Innenraum des ersten Befestigungselements (105) angeordnet und mit einer an einer Seitenwand (105c, 105d) des ersten Befestigungselements (105) angeordneten Öffnung (102b) zum Einführen des Steckelements (103a) versehen ist.

12. Befestigungseinrichtung nach Anspruch 5 oder 11, **dadurch gekennzeichnet, dass** zwischen der Aufnahmebuchse des ersten Befestigungselements (105) und dem zweiten Befestigungselement (106) eine Spannfeder (107) vorgesehen ist, welche die beiden Befestigungselemente (105, 106) in Richtung gegen die beiden Kopfstützenstangen (101b, 101c) drückt.

13. Befestigungseinrichtung nach Anspruch 11 oder 12, wobei das erste Befestigungselement (105) in dem zweiten Befestigungselement (106) geführt ist, [Anspruch 9] und das zweite Befestigungselement (106) das erste Befestigungselement (105) umgreift,
wobei das zweite Befestigungselement (106) im Bereich der Öffnung (102b) mit einer Aussparung (106c') so versehen ist, dass die Öffnung (102b) offen ist.

14. Befestigungseinrichtung nach einem der Ansprüche 11 bis 13, wobei die Aussenseiten der Bodenwände (105a, 106a), der Deckenwände (105b, 106b), der vorderen Seitenwände (105c, 106c) und der hinteren Seitenwände (105d, 106d) des ersten und des zweiten Befestigungselements (105, 106) in etwa fluchten, und wobei das erste Befestigungselement (105) und das zweite Befestigungselement (106) gemeinsam einen länglichen Körper in etwa in Form eines rechtwinkligen Parallelepipeds bilden.

15. Befestigungseinrichtung nach einem der Ansprüche 11 bis 14, wobei das erste Befestigungselement (105) und das zweite Befestigungselement (106) über eine Gewindespindel (108), deren Längsachse parallel zur Verbindungslinie (100) verläuft, gegeneinander oder auseinander bewegt werden können, und
wobei die Gewindespindel (108) oder eine Spindelmutter (108a) mit einem Verstellrad (108b), das durch eine im ersten oder im zweiten Befestigungselement (105, 106) angeordnete Gehäuseöffnung (108c) zugänglich ist, gedreht werden kann.

16. Befestigungseinrichtung nach Anspruch 5 oder 11, **dadurch gekennzeichnet, dass** eine manuell lösbare Verriegelungsvorrichtung (104) vorgesehen ist, mit der das Steckelement (103a) in der Aufnahmebuchse (102a) verriegelbar ist,
wobei am Steckelement (103a) ein Führungselement (103f) angeordnet ist, das von der Aufnahmebuchse (102a) aufgenommen wird und wobei das Führungselement (103f) einen Absatz (103m) aufweist, der sich an der Wandung (105, 105h) seitlich der Öffnung (102b) abstützt,
wobei auf beiden Seiten des Führungselements (103f) des Stecklelements Federarme (103g) angeordnet sind, an deren vorderen Enden sich nach aussen gerichtete Rasthaken (103h) befinden, welche in Ausnehmungen (102f) einhaken, die an den Seitenwänden (102e) der Aufnahmebuchse (102a) angeordnet sind, wobei an den beiden Federarmen (103g) nach aussen gerichtete Betätigungsorgane (103i) angeordnet sind, welche durch Tastenöffnungen (103k) an den beiden Seitenwänden (103d) des Steckelements (103a) ragen und mit denen die Federarme (103g) zum Lösen der Rasthaken (103h) gegeneinander gedrückt werden können,
wobei die Federarme (103g) an ihren hinteren Enden über Gelenke (103b", 103g') mit dem Steckelement (103a) verbunden sind und durch eine Verriegelungsfeder (103o) auseinandergedrückt werden.

17. Befestigungseinrichtung nach einem der Ansprüche 5, 6 oder 10 bis 16, wobei die Aufnahmebuchse (102a) sowie das erste und das zweite Befestigungselement (105, 106) seitlich nebeneinander angeordnet und in etwa gleich hoch sind.

## Claims

1. Fixing device for connecting an apparatus to two mutually spaced head rest bars (101b, 101c) of a vehicle seat (101), with a first coupling element (102, 102a) for receiving a second coupling element (103, 103a) which is or can be arranged on the apparatus and with a first fixing element (105) arranged on the first coupling element (102, 102a), and with a second fixing element (106) which is movably connected with the first fixing element (105),
wherein the first coupling element (102, 102a) can be fixed to the head rest bars (101b, 101c) by means of the first fixing elements,
wherein when the apparatus is connected to the head rest bars, the first fixing element (105) and the second fixing element (106) rest on the head rest bars (101b, 101c) and are movable relative to each other and parallel to a connecting line (100) running approximately horizontally between the centres of the head rest bars (101b, 101c), and
wherein a locking device (109) is provided, by means of which the relative movement between the first and second fixing elements (105, 106) can be blocked, such that a movement of the fixing elements (105, 106) in the direction towards the head rest bars is permitted and a movement of the fixing elements (105, 106) in the direction away from the head rest bars is blocked.

2. Fixing device according to claim 1, **characterised in that** an actuating element (109c) is provided via which the locking device (109) is released to allow the movement of the fixing elements (105, 106) in the direction away from the head rest bars.

3. Fixing device according to claim 2, **characterised in that** the locking device (109) is formed as an engagement lock with a toothed rod with saw teeth (109a) and a sprung catch (109b, 109b') in engagement with the toothed rod (109a), wherein the catch (109b, 109b') can be brought out of engagement with the toothed rod (109a) by means of the actuating element (109c).

4. Fixing device according to claim 3, wherein the toothed rod (109a) is arranged on the first fixing element (105) and the catch (109b, 109b') with the actuating element (109c) is arranged on the second fixing element (106).

5. Fixing device according to claim 4, **characterised in that** the first coupling element (102) is formed as a socket (102a) and the second coupling element (103) is formed as a plug element (103a), wherein the socket (102a) is arranged in the interior of the first fixing element (105) and has an opening (102b) arranged on a side wall (105c, 105d) of the first fixing element (105) for insertion of the plug element (103a), and wherein the toothed rod (109a) is arranged on a rear side wall (105d, 105h, 105h') of the first fixing element (105) opposite the opening (102b).

6. Fixing device according to claim 5, **characterised in that** the actuating element (109c) is formed as a pushbutton and arranged on a rear side wall (106d) of the second fixing element (106) opposite the opening (102b), wherein a housing recess (106d') is provided in the rear side wall (106d), through which the actuating element (109c) protrudes.

7. Fixing device for connecting an apparatus to two mutually spaced head rest bars (2a, 2b) of a vehicle seat (1), with a first coupling element (3, 3') for receiving a second coupling element (6, 6') which is or can be arranged on the apparatus, and with fixing elements which are arranged on the first coupling element (3, 3') and with which the first coupling element (3, 3') can be fixed to the head rest bars (2a, 2b),
wherein the fixing elements comprise clamping elements (5a, 5b) which are movable parallel to a connecting line of the head rest bars (2a, 2b) in opposite directions in a housing (7) and rest on the head rest bars (2a, 2b) when the apparatus is connected to the head rest bars,
wherein locking devices (9) are provided by means of which the clamping elements (5a, 5b) can be blocked in the housing (7) such that a movement of the clamping elements (5a, 5b) in the direction towards the head rest bars is permitted and a movement of the clamping elements (5a, 5b) away from the head rest bars is blocked.

8. Fixing device according to claim 7, **characterised in that** actuating elements (9c) are provided via which the locking devices (9) are released to move the clamping elements (5a, 5b) in the direction away from the head rest bars.

9. Fixing device according to claim 7 or 8, **characterised in that** the clamping elements (5a, 5b) are pretensioned by means of springs (5i, 5k) against the head rest bars (2a, 2b).

10. Fixing device according to claim 7, 8 or 9, **characterised in that** a socket (3') is provided in the housing (7), wherein fixing element portions (4a, 4b) are accommodated in the housing (7) at the side next to the socket (3'), on which portions guides (4c, 4d) are arranged which form guide channels (4e, 4f) to receive the clamping elements (5a, 5b).

11. Fixing device for connecting an apparatus to two mutually spaced head rest bars (101b, 101c) of a vehicle seat (101) also according to any of the preceding claims, with a first coupling element (102, 102a) to receive a second coupling element (103, 103a) which is or can be arranged on the apparatus, and with a first fixing element (105) arranged on the first coupling element (102, 102a), and with a second fixing element (106) which is movably connected with the first fixing element (105) and with which the first coupling element (102, 102a) can be fixed to the head rest bars (101b, 101c),
wherein when the apparatus is connected to the head rest bars, the first fixing element (105) and the second fixing element (106) rest on the head rest bars (101b, 101 c) and are movable relative to each other and parallel to a connecting line (100) running approximately horizontally between the centres of the head rest bars (101b, 101c), wherein the first coupling element (102) is formed as a socket (102a) and the second coupling element (103) is formed as a plug element (103a),
wherein the socket (102a) is arranged preferably centrally between the two head rest bars (101b, 101c) and the insertion direction of the plug (103a) in the socket (102a) runs approximately vertically to the connecting line (100),
wherein the first and the second fixing elements (105, 106) are connected via a linear guide (105h, 106h), arid
wherein the socket (102a) is arranged in the interior of the first fixing element (105) and has an opening (102b) arranged on a side wall (105c, 105d) of the first fixing element (105) for insertion of the plug element (103a).

12. Fixing device according to claim 5 or 11, **characterised in that** a clamping spring (107) is provided between the socket of the first fixing element (105) and the second fixing element (106), which spring presses the two fixing elements (105, 106) in the direction against the two head rest bars (101b, 101c).

13. Fixing device according to claim 11 or 12, wherein the first fixing element (105) is guided on the second fixing element (106) and the second fixing element (106) surrounds the first fixing element (105), wherein the second fixing element (106) has a recess (106c') in the region of the opening (102b) such that the opening (1 02b) is open.

14. Fixing device according to any of claims 11 to 13, wherein the outside of the floor walls (105a, 106a), the top walls (105b, 106b), the front side walls (105c, 106c) and the rear side walls (105d, 106d) of the first and second fixing elements (105, 106) are approximately aligned, and wherein the first fixing element (105) and the second fixing element (106) together form an elongated body approximately in the shape of a rectangular parallelepiped.

15. Fixing device according to any of claims 11 to 14, wherein the first fixing element (105) and the second fixing element (106) can be moved towards each other or away from each other via a threaded spindle (108), the longitudinal axis of which runs parallel to the connecting line (100), and wherein the threaded spindle (108) or a spindle nut (108a) can be turned with an adjustment wheel (108b) which is accessible through a housing opening (108c) arranged in the first or in the second fixing element (105, 106).

16. Fixing device according to claim 5 or 11, **characterised in that** a manually releasable locking device (104) is provided with which the plug element (103 a) can be locked in the socket (102a),
wherein a guide element (103f) is provided on the plug element (103a) and is received by the socket (102a), and wherein the guide element (103f) has a shoulder (103m) which rests on the wall (105, 105h) at the side of the opening (102b),
wherein spring arms (103g) are arranged on both sides of the guide element (103f) of the plug element and at their front ends have outwardly directed locking hooks (103h) which hook into recesses (102f) arranged on the side walls (102e) of the socket (102a),
wherein on the two spring arms (103g) are arranged outwardly directed actuating organs (103i) which protrude through button openings (103k) on the two side walls (103d) of the plug element (103a) and with which the spring arms (103g) can be pressed together to release the locking hooks (103h),
wherein the spring arms (103g) at their rear ends are connected to the plug element (103a) via pivots (103b", 103g') and pressed apart by a locking spring (103o).

17. Fixing device according to any of claims 5, 6 or 10 to 16, wherein the socket (102a) and the first and second fixing elements (105, 106) are arranged next to each other laterally and at approximately the same height.

## Revendications

1. Dispositif de fixation pour un raccordement d'un dispositif au niveau de deux barres d'appui-tête (101b, 101c), espacées l'une de l'autre, d'un siège de véhicule (101), avec un premier élément de couplage (102, 102a) destiné à recevoir un second élément de couplage (103, 103a) agencé ou pouvant être agencé au niveau du dispositif ainsi qu'un premier élément de fixation (105) agencé au niveau du premier élément de couplage (102, 102a), et un second élément de fixation (106) relié mobile au premier élément de fixation (105),
dans lequel le premier élément de couplage (102, 102a) peut être fixé avec les éléments de fixation au niveau des barres d'appui-tête (101b, 101c),
dans lequel le premier élément de fixation (105) et le second élément de fixation (106), lorsque le dispositif est raccordé aux barres d'appui-tête, s'appuient sur les barres d'appui-tête (101b, 101c) et sont mobiles l'un par rapport à l'autre de manière parallèle à une ligne de liaison (100) passant à peu près horizontalement entre les centres des barres d'appui-tête (101b, 101c), et
dans lequel un système d'encliquetage (109), grâce auquel le mouvement relatif entre les premier et second éléments de fixation (105, 106) peut être bloqué, est prévu de sorte qu'un mouvement des éléments de fixation (105, 106) en direction des barres d'appui-tête est permis et un mouvement des éléments de fixation (105, 106) dans une direction s'éloignant des barres d'appui-tête est empêché.

2. Dispositif de fixation selon la revendication 1, **caractérisé en ce qu'**un élément d'actionnement (109c) est prévu, par l'intermédiaire duquel le système d'encliquetage (109) est libéré dans une direction s'éloignant des barres d'appui-tête en vue d'un mouvement des éléments de fixation.

3. Dispositif de fixation selon la revendication 2, **caractérisé en ce que** le système d'encliquetage (109) est réalisé sous la forme d'un blocage par cliquet comprenant une crémaillère à denture (109a) et un cliquet (109b, 109b') suspendu sur ressort et se trouvant en prise avec la crémaillère (109a), le cliquet (109b, 109b') pouvant être libéré de la prise avec la crémaillère (109a) au moyen de l'élément d'actionnement (109e).

4. Dispositif de fixation selon la revendication 3, dans lequel la crémaillère (109a) est agencée au niveau du premier élément de fixation (105) et le cliquet (109b, 109b') est agencé avec l'élément d'actionnement (109c) au niveau du second élément de fixation (106).

5. Dispositif de fixation selon la revendication 4, **caractérisé en ce que** le premier élément de couplage (102) est réalisé sous la forme d'une douille de réception (102a) et le second élément de couplage (103) est réalisé sous la forme d'un élément enfichable (103a),
dans lequel la douille de réception (102a) est agencée à l'intérieur du premier élément de fixation (105) et est munie d'une ouverture (102b) agencée au niveau d'une paroi latérale (105c, 105d) du premier élément de fixation (105) en vue d'une introduction de l'élément enfichable (103a),
et dans lequel la crémaillère (109a) est agencée au niveau d'une paroi latérale (105d, 105h, 105h') arrière, faisant face à l'ouverture (102b), du premier élément de fixation (105).

6. Dispositif de fixation selon la revendication 5, **caractérisé en ce que** l'élément d'actionnement (109c) est réalisé sous la forme d'un bouton-poussoir et est agencé au niveau d'une paroi latérale (106d) arrière, faisant face à l'ouverture (102b), du second élément de fixation (106),
dans lequel un évidement (106d') du boîtier est prévu dans la paroi latérale (106d) arrière, à travers lequel l'élément d'actionnement (1 09c) fait saillie.

7. Dispositif de fixation pour un raccordement d'un dispositif au niveau de deux barres d'appui-tête (2a, 2b), espacées l'une de l'autre, d'un siège de véhicule (1), avec un premier élément de couplage (3, 3') destiné à recevoir un second élément de couplage (6, 6') agencé ou pouvant être agencé au niveau du dispositif
ainsi que des éléments de fixation agencés au niveau du premier élément de couplage (3, 3'), avec lesquels le premier élément de couplage (3, 3') peut être fixé au niveau des barres d'appui-tête (2a, 2b),
dans lequel les éléments de fixation comprennent des éléments de serrage (5a, 5b), qui sont mobiles dans un boîtier (7) dans des directions opposées parallèlement à une ligne de liaison des barres d'appui-tête (2a, 2b) et s'appuient sur les barres d'appui-tête (2a, 2b), lorsque le dispositif est raccordé aux barres d'appui-tête,
dans lequel des systèmes d'encliquetage (9), au moyen desquels les éléments de serrage (5a, 5b) peuvent être bloqués dans le boîtier (7), sont prévus, de sorte qu'un mouvement des éléments de serrage (5a, 5b) dans une direction allant vers les barres d'appui-tête est permis et un mouvement des éléments de serrage (5a, 5b) dans une direction s'éloignant des barres d'appui-tête est empêché.

8. Dispositif de fixation selon la revendication 7, **caractérisé en ce que** des éléments d'actionnement (9c) sont prévus, par l'intermédiaire desquels les systèmes d'encliquetage (9) sont libérés en vue d'un mouvement des éléments de serrage (5a, 5b) dans une direction s'éloignant des barres d'appui-tête.

9. Dispositif de fixation selon la revendication 7 ou 8, **caractérisé en ce que** les éléments de serrage (5a, 5b) sont précontraints contre les barres d'appui-tête (2a, 2b) au moyen de ressorts (5i, 5k).

10. Dispositif de fixation selon l'une quelconque des revendications 7, 8 ou 9, **caractérisé en ce qu'**une douille de réception (3') est prévue dans le boîtier (7), des secteurs d'élément de fixation (4a, 4b), au niveau desquels sont agencés des guides (4c, 4d) qui forment des canaux de guidage (4e, 4f) destinés à recevoir les éléments de serrage (5a, 5b), étant logés dans le boîtier (7) de manière latérale à côté de la douille de réception (3').

11. Dispositif de fixation pour un raccordement d'un dispositif au niveau de deux barres d'appui-tête (101b, 101c), espacées l'une de l'autre, d'un siège de véhicule (101), selon l'une quelconque des revendications précédentes,
avec un premier élément de couplage (102, 102a) destiné à recevoir un second élément de couplage (103a, 103a) agencé ou pouvant être agencé au niveau du dispositif, ainsi qu'un premier élément de fixation (105) agencé au niveau du premier élément de couplage (102, 102a), et un second élément de fixation (106) relié mobile au premier élément de fixation (105), avec lesquels le premier élément de couplage (102, 102a) peut être fixé sur les barres d'appui-tête (101b, 101e),
dans lequel le premier élément de fixation (105) et le second élément de fixation (106), lorsque le dispositif est raccordé aux barres d'appui-tête, s'appuient sur les barres d'appui-tête (101b, 101c) et sont mobiles l'un par rapport à l'autre de manière parallèle à une ligne de liaison passant à peu près horizontalement entre les centres des barres d'appui-tête (101b, 101c),
dans lequel le premier élément de couplage (102) est réalisé sous la forme d'une douille de réception (102a) et le second élément de couplage (103) est réalisé en tant qu'élément enfichable (103a),
dans lequel la douille de réception (102a) est agencée de manière préférée de manière médiane entre les deux barres d'appui-tête (101b, 101c) et la direction d'enfichage de l'élément enfichable (103a) dans la douille de réception (102a) est à peu près perpendiculaire à la ligne de liaison (100),
dans lequel les premier et second éléments de fixation (105, 106) sont reliés par l'intermédiaire d'un guidage linéaire (105h, 106h), et
dans lequel la douille de réception (102a) est agencée à l'intérieur du premier élément de fixation (105) et est munie d'une ouverture (102b) agencée au niveau d'une paroi latérale (105c, 105d) du premier élément de fixation (105) afin d'introduire l'élément enfichable (103a).

12. Dispositif de fixation selon la revendication 5 ou 11, **caractérisé en ce qu'**un ressort tendeur (107) est prévu entre la douille de réception du premier élément de fixation (105) et le second élément de fixation (106), ledit ressort tendeur pressant les deux éléments de fixation (105, 106) en direction des deux barres d'appui-tête (101b, 101e).

13. Dispositif de fixation selon la revendication 11 ou 12, dans lequel le premier élément de fixation (105) est guidé dans le second élément de fixation (106), [revendication 9] et le second élément de fixation (106) enveloppe le premier élément de fixation (105),
dans lequel le second élément de fixation (106) est muni d'un évidement (106c') dans le secteur de l'ouverture (102b), de sorte que l'ouverture (102b) est ouverte.

14. Dispositif de fixation selon l'une quelconque des revendications 11 à 13, dans lequel les faces extérieures des parois de fond (105a, 106a), des parois supérieures (105b, 106b), des parois latérales (105c 106c) avant et des parois latérales (105d, 106d) arrières des premier et second éléments de fixation (105, 106) sont à peu près alignées, et dans lequel le premier élément de fixation (105) et le second élément de fixation (106) forment en commun un corps allongé ayant à peu près la forme d'un parallélépipède rectangle.

15. Dispositif de fixation selon l'une quelconque des revendications 11 à 14, dans lequel le premier élément de fixation (105) et le second élément de fixation (106) peuvent être déplacés l'un vers l'autre ou l'un s'éloignant de l'autre par l'intermédiaire d'une tige filetée (108), dont l'axe longitudinal est parallèle à la ligne de liaison (100), et
dans lequel la tige filetée (108) ou un écrou fileté (108a) peut être tourné avec une molette de déplacement (108b), qui est accessible grâce à une ouverture de boîtier (108c) agencée dans le premier ou dans le second élément de fixation (105, 106).

16. Dispositif de fixation selon la revendication 5 ou 11, **caractérisé en ce qu'**un dispositif de verrouillage (104) pouvant être débloqué de manière manuelle est prévu, avec lequel l'élément enfichable (103a) peut être verrouillé dans la douille de réception (102a),
dans lequel un élément de guidage (103f) est agencé au niveau de l'élément enfichable (103a), ledit élément de guidage étant accueilli par la douille de réception (102a), et dans lequel l'élément de guidage (103f) présente un épaulement (103m), qui s'appuie sur la paroi (105, 105h) du côté de l'ouverture (102b),
dans lequel sont agencés, des deux côtés de l'élément de guidage (103f) de l'élément enfichable, des bras élastiques (103g) au niveau des extrémités avant desquels se trouvent des crochets d'encliquetage (103h) orientés vers l'extérieur, qui s'enclenchent dans des évidements (102f) qui sont agencés au niveau des parois latérales (102e) de la douille de réception (102a),
dans lequel des organes d'actionnement (103i) orientés vers l'extérieur sont agencés au niveau des deux bras élastiques (103g), lesdits organes d'actionnement faisant saillie à travers des ouvertures pour touches (103k) au niveau des deux parois latérales (103b) de l'élément enfichable (103a) et permettant de presser les bras élastiques (103g) l'un contre l'autre pour libérer les crochets d'encliquetage (103h),
dans lequel les bras élastiques (103g) sont reliés à l'élément enfichable (103a) par l'intermédiaire d'articulations (103b", 103g') au niveau de leurs extrémités postérieures et sont écartés l'un de l'autre grâce à un ressort de verrouillage (103o).

17. Dispositif de fixation selon l'une quelconque des revendications 5, 6 ou 10 à 16, dans lequel la douille de réception (102a) ainsi que les premier et second éléments de fixation (105, 106) sont agencés latéralement les uns à côté des autres et sont approximativement de même taille.
